# EUROPEAN PATENT SPECIFICATION

(11) **EP 2 852 884 B1**
(45) Date of publication and mention of the grant of the patent: **17.07.2019**
(21) Application number: 13726889.2
(22) Date of filing: 14.05.2013
(51) Int. Cl.: G06F 3/0486, G06F 3/0488, G06F 9/44, G06F 3/0481, H04Q 9/00, G06F 8/34, H02J 3/32, H02J 7/35, H02J 13/00, G06F 3/0484

(54) **DISPLAY CONTROLLING APPARATUS, DISPLAY CONTROLLING METHOD, PROGRAM AND CONTROL APPARATUS**
ANZEIGESTEUERUNGSVORRICHTUNG, ANZEIGESTEUERVERFAHREN, PROGRAMM UND STEUERUNGSVORRICHTUNG
APPAREIL DE COMMANDE D'AFFICHAGE, PROCÉDÉ DE COMMANDE D'AFFICHAGE, PROGRAMME ET APPAREIL DE COMMANDE

(30) Priority: 21.05.2012 JP 2012115738
(43) Date of publication of application: 01.04.2015
(73) Proprietor: Sony Corporation, Tokyo 108-0075 (JP)
(72) Inventor: ANDRE, Alexis, Tokyo 141-0022 (JP); ISHIBASHI, Yoshihito, Tokyo 141-0022 (JP)
(74) Representative: Witte, Weller & Partner Patentanwälte mbB
(86) International application number: PCT/JP2013/063879
(87) International publication number: WO 2013/176065

(56) References cited:
- JP-A- 2010 169 314
- US-A1- 2004 061 701
- US-A1- 2011 225 524
- TiegonBerry: "Let's play pipe dreams try 1 part 1 - YouTube", , 8 October 2008 (2008-10-08), page 1, XP054975321, Retrieved from the Internet: URL:http://www.youtube.com/watch?v=GDh0e9e 3dnE [retrieved on 2014-02-13]
- 8SpeedNet: "Volkswagen Touareg Animation hybrid technology - YouTube", , 9 March 2010 (2010-03-09), page 1, XP054975323, Retrieved from the Internet: URL:http://www.youtube.com/watch?v=0Cy6BYu eA8w [retrieved on 2014-02-13]
- Anonymous: "Solved: Creating an illuminated flowpath on the front panel - Discussion Forums - National Instruments", , 11 March 2011 (2011-03-11), XP055541040, Retrieved from the Internet: URL:https://forums.ni.com/t5/LabVIEW/Creat ing-an-illuminated-flowpath-on-the-front-p anel/td-p/1762280 [retrieved on 2019-01-11]

## Description

### [Technical Field]

The present invention relates to a display controlling apparatus, a display controlling method, a program and a control apparatus.

### [Background Art]

As described in Patent Literature 1, visualization (placement into visibility) of a flow of electric power has been proposed.

US 2011/225524 A1 discloses a system and method for multi-touch editing in a graphical programming language. In one embodiment, a graphical program is displayed on a display device. The graphical program may be created or assembled by the user arranging on a display a plurality of nodes or icons and then interconnecting the nodes to create the graphical program. In response to the user assembling the graphical program, data structures may be created and stored which represent the graphical program. The nodes may be interconnected in one or more of a data flow, control flow, or execution flow format. The graphical program may thus comprise a plurality of interconnected nodes or icons which visually indicates the functionality of the program.

The graphical program may comprise a block diagram and a user interface portion or front panel portion, whereby the user may optionally assemble the user interface on the display. As one example, the user may use the LabVIEW® graphical programming development environment to create the graphical program. The graphical programming development environment may be configured to support multi-touch editing operations. In one example, the user may "touch" two graphical program nodes, e.g., with two fingers, a finger and thumb, etc., and the nodes may be automatically wired, i.e., connected for data flow. The nodes in the graphical program may be connected in one or more of a data flow, control flow, and/or execution flow format. The nodes may also be connected in a "signal flow" format, which is a subset of data flow.

US 2004/061701 A1 discloses a computer-based method and system for determining performance information for components and/or connections of a data storage network and for displaying in a user interface the performance information in an animated fashion that effectively shows a user on a single screen or display the operating status of the data storage network.

Anonymous, "Solved: Creating an illuminated flowpath on the front panel - Discussion Forums - National Instruments" [online], 11 March 2011 [retrieved on 2019-01-11] [retrieved from https:// forums.ni.com/t5/LabVIEW/Creating-an-illuminated-flowpath-on-the-front-panel/td-p/1762280] discloses a LabVIEW® custom control for color mixing, wherein arrows are moved at a code specified rate to simulate relative flow rates and chemical mixing in pipes.

### [Citation List]

### [Patent Literature]

[PTL 1]
Japanese Patent Laid-Open No. 2010-169314

### [Summary]

### [Technical Problem]

The technology described in Patent Literature 1 merely visualizes a flow of electric power, and it is not disclosed that an operation is carried out for a flow of electric power.

Accordingly, one of objects of the present disclosure resides in provision of a display controlling apparatus, a display controlling method, a program and a control apparatus by which, for example, a flow of electric power is visualized and it is possible to carry out an operation for the visualized flow of electric power.

### [Solution to Problem]

According to an embodiment of the present disclosure, there is provided a display controlling apparatus as defined in claim 1.

According to another embodiment of the present disclosure, there is provided a display controlling method as defined in claim 14.

According to another embodiment of the present disclosure, there is provided a non-transitory recording medium recorded with a program executable by a computer as defined in claim 15.

The dependent claims define advantageous embodiments.

### [Advantageous Effect of Invention]

In at least one of the embodiments, a flow of electric power is displayed on a display section, and an operation for the displayed flow of electric power can be carried out.

### [Brief Description of Drawings]

FIG. 1 is a block diagram illustrating an example of a configuration of a control apparatus.
FIG. 2 is a view illustrating an example of a configuration of a changeover section.
FIG. 3 is a view illustrating an example of a display image of marks.
FIG. 4 is a view illustrating an example of an operation.
FIG. 5 is a view illustrating an example of a display image after the operation.
FIG. 6 is a flow chart illustrating an example of a flow of processing.
FIG. 7 is a view illustrating another example of a display image of marks.
FIG. 8 is a view illustrating another example of an operation.
FIG. 9 is a flow chart illustrating another example of a flow of processing.
FIG. 10 is a view illustrating a further example of an operation.
FIG. 11 is a view illustrating a still further example of an operation.
FIG. 12 is a view illustrating a yet further example of an operation.
FIG. 13 is a view illustrating an example of a display image after the operation.
FIG. 14 is a flow chart illustrating a further example of a flow of processing.
FIG. 15 is a view illustrating a yet further example of an operation.
FIG. 16 is a view illustrating an example of a display image after the operation.
FIG. 17 is a flow chart illustrating a still further example of a flow of processing.
FIG. 18A is a view illustrating an example of a display image of a mark, and FIG. 18B is a view illustrating another example of a display image of a mark.
FIG. 19 is a view illustrating an example of a display image of marks and so forth.
FIG. 20 is a view illustrating a yet further example of an operation.
FIG. 21 is a view illustrating an example of a display image after the operation.
FIG. 22 is a view illustrating a yet further example of an operation.
FIG. 23 is a view illustrating an example of a display image after the operation.
FIG. 24 is a block diagram illustrating an example of a configuration of a portable terminal.
FIG. 25 is a view illustrating a modification.
FIG. 26 is a view illustrating a modification.

### [Description of Embodiment]

In the following, an embodiment of the present disclosure is described with reference to the drawings. It is to be noted that the description is given in the following order.
1. One Embodiment
   1-1. About Control Apparatus (Display Controlling Apparatus)
   1-2. About Changeover Section and Load
   1-3. First Particular Example
   1-4. Second Particular Example
   1-5. Third Particular Example
   1-6. Fourth Particular Example
   1-7. Fifth Particular Example
   1-8. Sixth Particular Example
2. Modification
   2-1. Portable Terminal
   2-2. Other Modifications

It is to be noted that the embodiment and the modifications described below are preferred particular examples of the present disclosure, and the substance of the present disclosure is not restricted to the embodiment and the modifications.

### <1. One Embodiment>

### 1-1. About Control Apparatus (Display Controlling Apparatus)

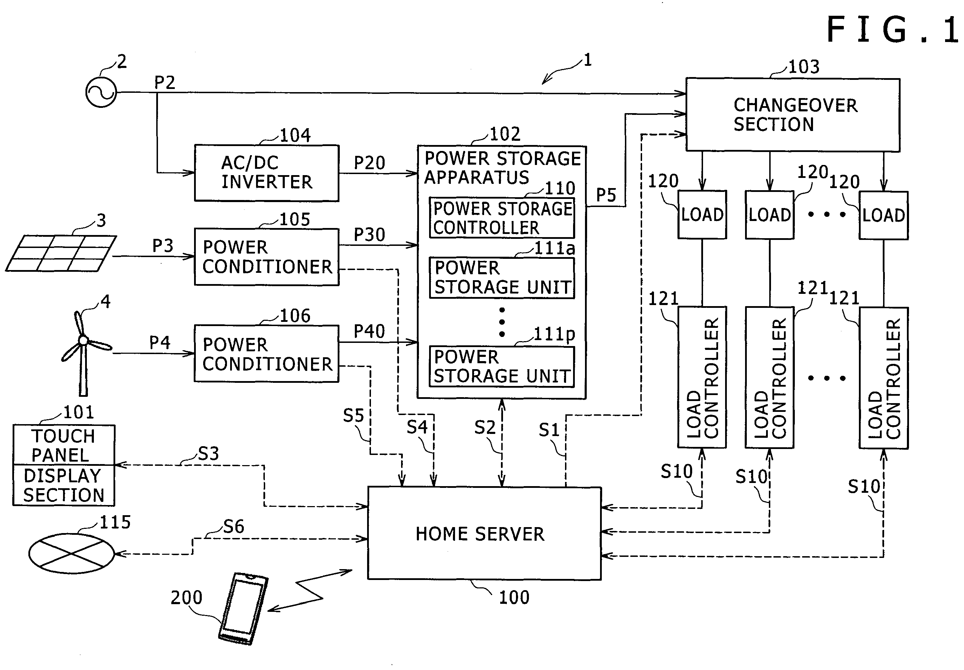

An example of a configuration of a control apparatus is described with reference to FIG. 1. The control apparatus 1 is an apparatus which controls, for example, supply of electric power to a load, operation of the load and so forth. Further, the control apparatus 1 is also an apparatus (display controlling apparatus) which suitably changes the substance of a display image to be displayed on a display section.

To the control apparatus 1, electric power is supplied, for example, from a power grid (grid) and a plurality of electric generators. To the control apparatus 1, electric power may be supplied only from a power grid. Or, to the control apparatus 1, electric power may be supplied only from a power grid and one electric generator.

The electric generator is an apparatus which generates electric power utilizing energy existing therearound such as sunlight, wind power, biomass or geothermal heat. In one embodiment, as a plurality of electric generators, a solar power generation apparatus and a wind power generation apparatus are exemplified. In FIG. 1, a power grid 2 is schematically indicated by an AC voltage source; a solar power generation apparatus 3 is schematically indicated by a solar panel; and a wind power generation apparatus 4 is schematically indicated by a windmill. In FIG. 1, electric power supplied from the power grid 2, solar power generation apparatus 3 or the like is indicated by a solid line arrow mark.

The control apparatus 1 is configured such that it includes a home server 100, a display section 101, a power storage apparatus 102, a changeover section 103, an AC (Alternating Current)/DC (Direct Current) inverter 104, a power conditioner 105 and another power conditioner 106. The display section 101 is configured as a touch panel which can be operated, for example, by a finger of a user or a stylus pen. The power storage apparatus 102 is configured such that it includes a power storage controller 110, and 16 power storage units 111 (power storage unit 111a, power storage unit 111b, power storage unit 111c, ···, power storage unit 111p). It is to be noted that the number of power storage units 111 is an example and is not limited to 16.

The home server 100 can communicate with a different apparatus. The home server 100 can communicate with a different apparatus through a network 115 such as the Internet. Further, the home server 100 can carry out short-range wireless communication with a portable terminal 200 such as a smartphone or a portable telephone set.

A plurality of loads 120 are connected to the changeover section 103. Each of the loads 120 includes a load controller 121 which controls the load 120. The home server 100 and each load controller 121 are connected to a wired or wireless LAN (Local Area Network) so that transfer of a control signal or data is carried out through the LAN. The load controller 121 controls operation of the load 120 in response to a control signal supplied thereto, for example, from the home server 100. It is to be noted that, in FIG. 1, a flow of a control signal or data is indicated by an arrow mark of a broken line.

An example of a flow of electric power is described. Electric power P2 (for example, an AC voltage of 100 V (Volt)) supplied from the power grid 2 is inputted to the changeover section 103. The electric power P2 is further inputted to the AC/DC inverter 104. The electric power P2 is converted into electric power P20 of DC current by the AC/DC inverter 104. The electric power P20 is inputted to the power storage apparatus 102.

Electric power P3 of DC current from the solar power generation apparatus 3 is inputted to the power conditioner 105. The power conditioner 105 converts the electric power P3, which is unstable, into electric power P30 of DC current, which is stable. The electric power P30 is inputted to the power storage apparatus 102.

Electric power P4 of DC current from the wind power generation apparatus 4 is inputted to the power conditioner 106. The power conditioner 106 converts the electric power P4, which is unstable, into electric power P40 of DC current, which is stable. The electric power P40 is inputted to the power storage apparatus 102.

The power storage units 111 are charged based on the electric power P20, electric power P30 and electric power P40. For example, the power storage unit 111a is charged based on the electric power P20. The power storage unit 111b is charged based on the electric power P30. The power storage unit 111c is charged based on the electric power P40. Then, a power storage unit which is not being charged (for example, the power storage unit 111d) discharges and electric power P5 of DC current is outputted from the power storage unit 111d. The electric power P5 is supplied to the changeover section 103. Charging into the power storage units 111 and discharging from the power storage units 111 are controlled by the power storage controller 110.

It is to be noted that, at night, the electric power P3 from the solar power generation apparatus 3 is almost zero. When no wind blows, the electric power P4 from the wind power generation apparatus 4 is almost zero. Therefore, the electric power P30 or the electric power P40 may not always be supplied to the power storage apparatus 102.

Now, details of the components of the control apparatus 1 are described. The home server 100 is configured, for example, from a CPU (Central Processing Unit) and controls the components of the control apparatus 1. The home server 100 supplies a signal S1 to the changeover section 103. The signal S1 is a control signal, for example, for changing over a switch SW of the changeover section 103.

The home server 100 communicates with the power storage controller 110 of the power storage apparatus 102 to transfer a signal S2 therebetween. The signal S2 is a generic term of information relating to the ratio of the remaining capacity of the power storage units 111, information of electric power supplied to the power storage apparatus 102, a control signal supplied from the home server 100 to the power storage apparatus 102, and so forth.

The home server 100 transfers a signal S3 to and from the display section 101. The signal S3 is, for example, display data for displaying a predetermined image on the display section 101 or a driving signal for driving the display section 101. The signal S3 includes an operation signal generated in response to an operation for the display section 101. It is to be noted that a control signal supplied from the home server 100 to the display section 101 for controlling the display image of the display section 101 is suitably referred to as control signal S3a. An operation signal generated in response to an operation for the display section 101 and supplied from the display section 101 to the home server 100 is suitably referred to as operation signal S3b.

A signal S4 is supplied from the power conditioner 105 to the home server 100. The signal S4 is data indicative of an electric power generation amount of the solar power generation apparatus 3. The signal S4 is supplied, for example, in a predetermined period from the power conditioner 105 to the home server 100.

A signal S5 is supplied from the power conditioner 106 to the home server 100. The signal S5 is data indicative of, for example, a generated electric power amount of the wind power generation apparatus 4. The signal S5 is supplied, for example, in a predetermined period from the power conditioner 106 to the home server 100.

The home server 100 communicates with a different apparatus through the network 115 to transfer a signal S6. The signal S6 is a generic term of data and so forth transferred between the home server 100 and the other apparatus.

The home server 100 transfers a signal S10 to and from the load controller 121 connected to the loads 120. The signal S10 includes a control signal supplied from the home server 100 to the load controller 121 and information indicative of power consumption at present of the loads 120.

It is to be noted that, though not shown, the home server 100 has a memory such as, for example, a ROM (Read Only Memory) and a RAM (Random Access Mirror). In the ROM, a program to be executed by the home server 100 is stored. For example, a display controlling program for controlling the display image of the display section 101 and a program for controlling the changeover section 103 or the load controller 121 are stored in the ROM. The RAM is used, for example, as a working memory when the home server 100 executes a program. Various data may be stored into the RAM.

The display section 101 includes a monitor configured from an LCD (Liquid Crystal Display) unit or an organic EL (Electroluminescence) unit, and a driver for driving the monitor. The driver operates in response to the control signal S3a supplied from the home server 100 so that a predetermined image is displayed on the display section 101. The display section 101 has such a size that it can be operated, for example, by one hand or by both hands. Naturally, the size of the display section 101 can be changed suitably.

The display section 101 is configured as a touch panel, for example, of the capacitance type. The display section 101 may be configured otherwise from a touch panel of any other type such as the resistive film type or the optical type. The display section 101 allows an operation of touching therewith by a stylus pen or a finger of a user. The operation signal S3b is generated in response to an operation to the display section 101. The operation signal S3b is supplied to the home server 100.

The power storage apparatus 102 has a power storage controller 110 and a plurality of power storage units 111. The power storage apparatus 102 has, for example, 16 power storage units 111 (power storage unit 111a, power storage unit 111b, ···, power storage unit 111p). In the case where there is no necessity to distinguish the individual power storage units from each other, each of them is suitably referred to as power storage unit 111. The number of power storage units 111 is not limited to 16 but can be increased or decreased suitably.

The power storage controller 110 controls the power storage units 111. The power storage controller 110 acquires the ratio of the remaining amount of the power storage units 111 and transmits information regarding the acquired ratio of the remaining capacity to the home server 100. The ratio of the remaining capacity is the ratio of the total value of the remaining capacities of all power storage units 111 to the overall capacitance of the power storage units 111.

The power storage controller 110 controls charging of the power storage units 111. The power storage controller 110 acquires, for example, the remaining capacity of the power storage units 111 and sets that one of the power storage units 111 which exhibits the smallest remaining capacity as the power storage unit 111 of a charging target. The power storage unit which exhibits the smallest number of times of charging may be determined as the power storage unit 111 of a charging target. The algorithm for determining the power storage unit 111 of a charging target can be changed suitably.

The power storage controller 110 charges the power storage unit 111 of a charging target, for example, using the electric power P20. In the case where the electric power P30 or the electric power P40 is supplied, charging using the electric power P30 or the electric power P40 may be carried out, for example, for the power storage unit 111 which exhibits the second smallest remaining capacity. The method of charging carried out by the power storage controller 110 is determined in response to the type of the power storage unit 111. In the case where the power storage unit 111 is, for example, a lithium-ion secondary battery, charging based on a CCCV (Constant Voltage Constant Current) method is carried out.

It is to be noted that a process of converting the electric power P20 and so forth (for example, a step down process) is carried out by the power storage controller 110 so that charging based on the electric power P20, electric power P30 or electric power P40 can be carried out for the power storage unit 111. Further, a process of assuring the safety such as to prevent overcharging upon charging may be carried out by the power storage controller 110.

Further, the power storage controller 110 controls discharging of the power storage units 111. The power storage controller 110 acquires the remaining capacity, for example, of the power storage units 111 and determines that one of the power storage units 111 which exhibits the greatest remaining amount as a power storage unit 111 of a discharging target. The power storage unit which exhibits the smallest number of times of discharging may be determined as the power storage unit 111 of a discharging target. The algorithm for determining the power storage unit 111 of a discharging target can be changed suitably. The power storage unit 111 of a discharging target discharges. The electric power by discharging is suitably converted by the power storage controller 110, and the electric power P5 of DC current is outputted from the power storage apparatus 102. The electric power P5 is outputted to the changeover section 103.

Each power storage unit 111 is a lithium-ion battery, an olivine-type lithium-ion iron phosphate battery, a lead-acid battery, an NAS battery or the like. Or, a plurality of such batteries may be connected. A battery other than the exemplified batteries or an electric double layer capacitor may be used. The power storage controller 110 is configured so as to be compatible with the power storage units 111.

The changeover section 103 operates in response to the signal S1 supplied thereto from the home server 100. As the changeover section 103 operates, supply of power to the loads 120 is controlled. It is to be noted that details of the changeover section 103 are hereinafter described.

The power conditioner 105 converts the electric power P3, which is unstable, of the solar power generation apparatus 3 into the electric power P30, which is stable. The power conditioner 105 carries out control (maximum power point tracking control (Maximum Power Point Tracking (MPPT)) of tracking the variation of electric power generated by the solar cell of the solar power generation apparatus 3 to always chase a maximum power point. The power conditioner 105 has a measuring instrument (not shown) for measuring the generated power amount of the solar power generation apparatus 3. The power conditioner 105 measures the generated power amount of the solar power generation apparatus 3 in a predetermined period (for example, one second) and supplies the signal S4 indicative of the generated power amount of the solar power generation apparatus 3 to the home server 100. The signal S4 may otherwise be information indicative of power supply (electric power P30) to the power storage apparatus 102.

The power conditioner 106 converts the electric power P4, which is unstable, of the wind power generation apparatus 4 into the electric power P40, which is stable. The power conditioner 106 carries out control of optimizing output power of the wind power generation apparatus 4 and so forth. The power conditioner 106 has a measuring instrument (not shown) for measuring the generated power amount of the wind power generation apparatus 4. The power conditioner 106 measures the generated power amount of the wind power generation apparatus 4 in a predetermined period (for example, one second) and supplies the signal S5 indicative of the generated power amount of the wind power generation apparatus 4 to the home server 100. The signal S5 may otherwise be information indicative of power supply (electric power P40) to the power storage apparatus 102.

### 1-2. Changeover Section and Load

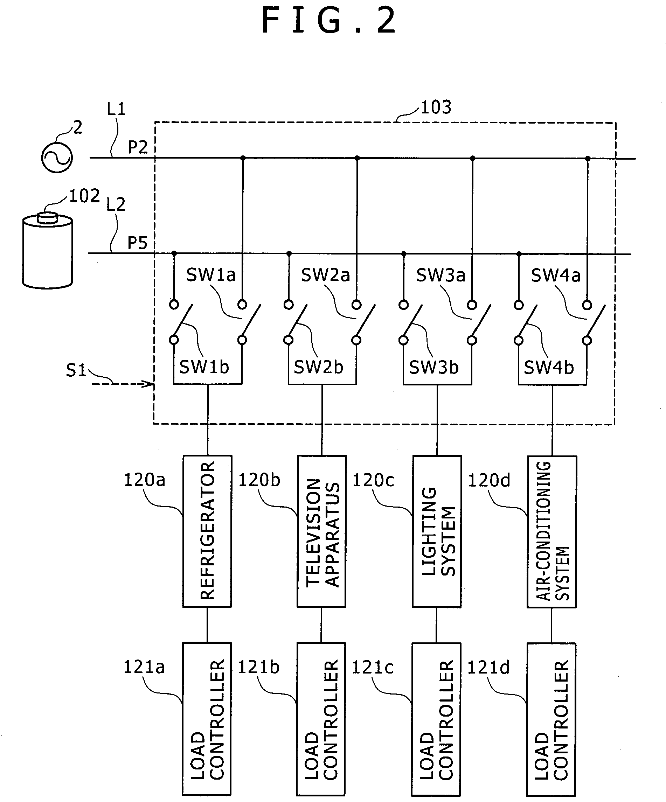

An example of the configuration of the changeover section 103 and a load are described with reference to FIG. 2. To the changeover section 103, the electric power P2 from the power grid 2 is inputted through a line L1. Further, to the changeover section 103, the electric power P5 from the power storage apparatus 102 is inputted through another line L2.

The changeover section 103 is connected to a plurality of loads 120. As the plural loads 120, a refrigerator 120a, a television apparatus 120b, a lighting system 120c configured from an LED (Light Emitting Diode) and an air-conditioning system 120d are exemplified. The refrigerator 120a is connected to the line L1 through a switch SW1a and connected to the line L2 through another switch SW1b. The television apparatus 120b is connected to the line L1 through a switch SW2a and connected to the line L2 through another switch SW2b.

The lighting system 120c is connected to the line L1 through a switch SW3a and connected to the line L2 through another switch SW3b. The air-conditioning system 120d is connected to the line L1 through a switch SW4a and connected to the line L2 through another switch SW4b. It is to be noted that, in the case where there is no necessity to distinguish the individual switches, each of them is suitably referred to as switch SW.

Each switch SW is configured from a switching element such as an FET (Field Effect Transistor) or an IGBT (Insulated Gate Bipolar Transistor). Each of the switches SW is controlled on/off by the signal S1 transmitted from the home server 100. For example, in order to use the electric power P2 to operate the refrigerator 120a, the switch SW1a is switched on and the switch SW1b is switched off. In order to use the electric power P5 to operate the refrigerator 120a, the switch SW1a is switched off and the switch SW1b is switched on.

The loads 120 are connected to the load controller 121. The refrigerator 120a is connected to the load controller 121a. The television apparatus 120b is connected to the load controller 121b. The lighting system 120c is connected to the load controller 121c. The air-conditioning system 120d is connected to the load controller 121d.

The load controller 121a controls operation of the refrigerator 120a. The load controller 121a carries out known control of the refrigerator 120a. For example, the load controller 121a carries out control of changing the internal temperature of the refrigerator 120a. Control to set the internal temperature of the refrigerator 120a to a rather high temperature and set the power consumption of the refrigerator 120a to a low level is carried out by the load controller 121a. Control to set the internal temperature of the refrigerator 120a to a low temperature is carried out by the load controller 121a. In the case of this control, the power consumption of the refrigerator 120a is high. Control by the load controller 121a is carried out in response to a control signal (suitably referred to as control signal S10a) supplied, for example, from the home server 100 to the load controller 121a.

The load controller 121a uses a sensor or the like to acquire power consumption at present of the refrigerator 120a. The load controller 121a supplies power consumption information indicative of the power consumption at present of the refrigerator 120a to the home server 100. The load controller 121a further operates as an inverter. The load controller 121a suitably converts the electric power P2 or the electric power P5 so as to be compatible with the refrigerator 120a.

The load controller 121b controls operation of the television apparatus 120b. The load controller 121b carries out known control for the television apparatus 120b. For example, the load controller 121b carries out control of changing the brightness of the display panel of the television apparatus 120b. Control of lowering the brightness of the display panel of the television apparatus 120b to reduce the power consumption of the television apparatus 120b is carried out by the load controller 121b. Control of making the brightness of the display panel of the television apparatus 120b brighter than the ordinary brightness is carried out by the load controller 121b. In the case of this control, the power consumption of the television apparatus 120b increases. The control by the load controller 121b is carried out, for example, in response to a control signal (suitably referred to as control signal SlOb) supplied from the home server 100 to the load controller 121b.

The load controller 121b acquires power consumption at present of the television apparatus 120b using a sensor or the like. The load controller 121b supplies power consumption information indicative of the power consumption at present of the television apparatus 120b to the home server 100. Further, the load controller 121b converts the electric power P2 or the electric power P5 suitably so as to be compatible with the television apparatus 120b. For example, the load controller 121b carries out a process of converting the electric power P2 of AC current into that of DC current.

The load controller 121c controls operation of the lighting system 120c. The load controller 121c carries out known control for the lighting system 120c. For example, the load controller 121c carries out control of changing the brightness of the lighting system 120c. Control to decrease the brightness of the lighting system 120c and reduce the power consumption of the lighting system 120c is carried out by the load controller 121c. Control to increase the brightness of the lighting system 120c is carried out by the load controller 121c. In the case of the present control, the power consumption of the lighting system 120c increases. For example, by controlling the current to be supplied to the LED, the brightness of the lighting system 120c can be changed. The control by the load controller 121c is carried out in response to a control signal (suitably referred to as control signal S10c) supplied, for example, from the home server 100 to the load controller 121c.

The load controller 121c acquires the power consumption at present of the lighting system 120c using a sensor or the like. The load controller 121c supplies power consumption information indicative of the power consumption at present of the lighting system 120c to the home server 100. Further, the load controller 121c suitably converts the electric power P2 or the electric power P5 so as to be compatible with the lighting system 120c.

The load controller 121d controls operation of the air-conditioning system 120d. The load controller 121d carries out known control for the air-conditioning system 120d. For example, in the case where the air-conditioning system 120d is used as a cooling apparatus, the load controller 121d carries out control of lowering the setting temperature of the air-conditioning system 120d to lower the room temperature. In this instance, the power consumption of the air-conditioning system 120d increases. On the contrary, the load controller 121d carries out control of raising the setting temperature of the air-conditioning system 120d. In this instance, the power consumption of the air-conditioning system 120d decreases.

Control by the load controller 121d is carried out in response to a control signal (suitably referred to as control signal S10d) supplied, for example, from the home server 100 to the load controller 121d. The load controller 121d acquires the power consumption at present of the air-conditioning system 120d using a sensor or the like. The load controller 121d supplies the power consumption information indicative of the power consumption at present of the air-conditioning system 120d to the home server 100. Further, the load controller 121d operates as an inverter and suitably converts the electric power P2 or the electric power P5 so as to be compatible with the air-conditioning system 120d.

Naturally, loads different from the exemplified loads 120 may be connected to the line L1 and the line L2. Control corresponding to the loads 120 is carried out by the load controllers 121 connected to the loads 120.

Now, an example of operation of the control apparatus 1 relating to the present disclosure is described. The home server 100 supplies the control signal S3a including predetermined display data and a driving signal for the display section 101 to the display section 101. A display image based on the control signal S3a is displayed on the display section 101.

An operation for the display section 101 is carried out using, for example, a finger (one finger or a plurality of fingers) of a user. The operation signal S3b corresponding to the operation is supplied to the home server 100. The home server 100 analyzes the substance of the operation signal S3b and carries out control in response to the operation signal S3b. For example, the home server 100 generates the control signal S3a in response to the operation signal S3b. The generated control signal S3a is supplied to the display section 101, and the display image of the display section 101 transits.

The home server 100 controls operation of the components of the control apparatus 1 and the loads 120 in response to the operation signal S3b. For example, the home server 100 controls the switches SW of the changeover section 103 on/off in response to the operation signal S3b. For example, the home server 100 signals the signal S10 to the load controller 121 in response to the operation signal S3b and controls operation of the load 120 connected to the load controller 121. In this manner, the home server 100 carries out a process of suitably changing the display substance of the display section 101 or a process of controlling operation of the components of the control apparatus 1 or the loads 120 in response to an operation for the display section 101. In the following, description is given in connection with particular examples.

### 1-3. First Particular Example

A first particular example is described. In an initial state of the first particular example, it is assumed that the switch SW2a and the switch SW2b of the changeover section 103 are in an off state.

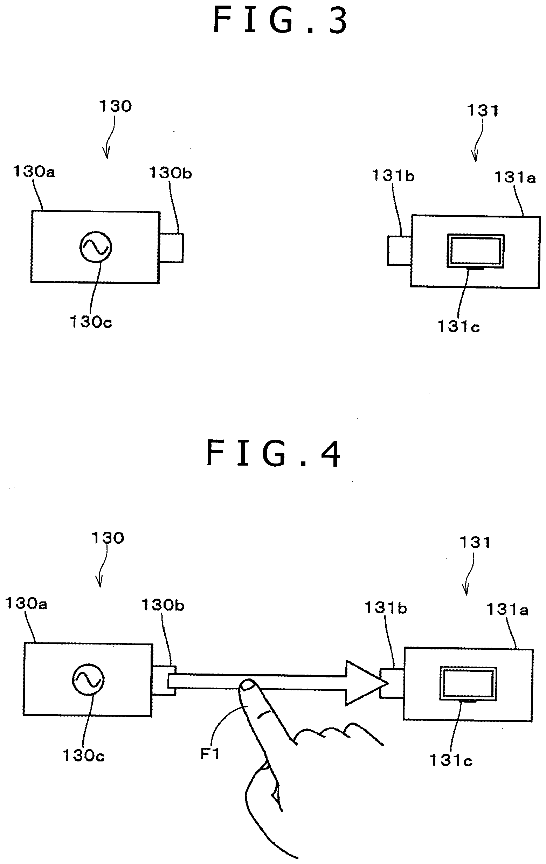

FIG. 3 shows an example of marks displayed on the display section 101. As shown in FIG. 3, a mark 130 which is an example of a first mark and a mark 131 which is an example of a second mark are displayed in a spaced relationship from each other on the display section 101. The mark 130 and the mark 131 are displayed, for example, in response to a displaying instruction provided to the control apparatus 1. The mark 130 is a mark corresponding to the supply side of electric power (for example, the power grid 2), and the mark 131 is a mark corresponding to the consumption side of power (for example, the television apparatus 120b).

The mark 130 includes, for example, a rectangular mark 130a, another mark 130b disposed on the right side of the mark 130a in the drawing and modeling a connection terminal, and a further mark 130c displayed in the inside of the mark 130a. The mark 130c is a mark of an AC voltage source which is a mark which models, for example, the power grid 2.

The mark 131 includes, for example, a rectangular mark 131a, another mark 131b disposed on the left side of the mark 131a and modeling a connection terminal, and a further mark 131c disposed in the inside of the mark 131a. The mark 131c is a mark which models a television apparatus which is an apparatus corresponding to the mark 131.

The shape of the mark 130 and the mark 131 is not limited to the exemplified shape but can be changed suitably. For example, the mark 130 may have a circular shape. The mark 130 need not include the mark 130b. The mark 130 and the mark 131 are displayed at suitable positions of the display section 101 such that, for example, such an operation as hereinafter described can be carried out.

FIG. 4 illustrates an operation for the display section 101 in the first particular example. Such an operation as to connect the mark 130 and the mark 131 using a finger (for example, the forefinger) F1 of a user is carried out for the display section 101. For example, the finger F1 depresses the mark 130b or a location in the proximity of the mark 130b. While the display section 101 is kept depressed by the finger F1, the finger F1 is slidably moved to the mark 131b. The operation exemplified in FIG. 4 is suitably referred to as drag operation.

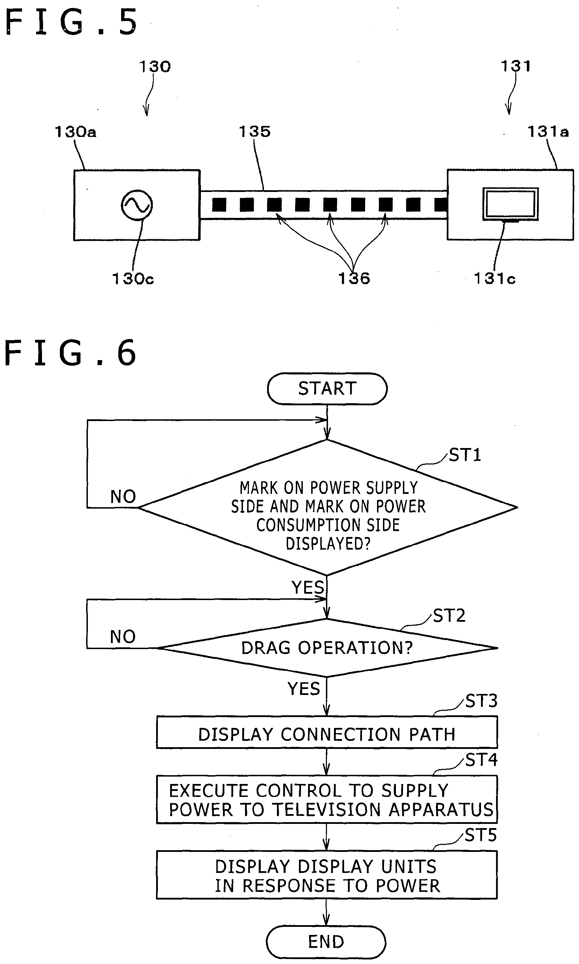

FIG. 5 illustrates an example of a display image of the display section 101 after a drag operation is carried out. The term "after a drag operation is carried out" is a timing at which, for example, the finger F1 slidably moved to the mark 131b is moved away from the display section 101. A connection path 135 which connects the section 101. A connection path 135 which connects the mark 130 and the mark 131 to each other is displayed in response to the drag operation. A display unit 136 is displayed at a position of the connection path 135 in the proximity of the mark 130. The display unit 136 (also called indication unit) moves at a predetermined moving speed toward the mark 131 along the connection path 135. The display unit 136 reaching the proximity of the mark 131 is erased. It is to be noted that, in order to prevent the illustration from becoming complicated, the reference numeral 136 is applied to only part of such display units.

In particular, a plurality of display units 136 move from the mark 130 toward the mark 131 along the connection path 135. The moving speed of the display units 136 varies in response to the electric power (power consumption) at present used by the apparatus corresponding to the mark 131. For example, the moving speed of the display units 136 increases as the power consumption at present of the apparatus corresponding to the mark 131 increases, and as the power consumption at present of the apparatus corresponding to the mark 131 decreases, the moving speed of the display units 136 decreases.

The amount of energy (electric power) consumed at the mark 131 and the number of displayed ones of the display units 136 correspond to each other. For example, as the power consumption at present of the apparatus corresponding to the mark 131 increases, the displayed number of display units 136 increases, and as the power consumption at present of the apparatus corresponding to the mark 131 decreases, the displayed number of display units 136 decreases. Naturally, the moving speed of the display units 136 or the displayed number of display units 136 may have a different meaning. Only one of the moving speed and the displayed number may be varied. The magnitude or the shape of the display units 136 may be varied. By the display in which the display units 136 move, a flow of electric power can be indicated. The display units 136 are, for example, rectangular marks. The display units 136 may have another shape such as a circular shape and may further be colored in an arbitrary color such as red or blue. In some embodiments, the display unit 136 may include a plurality of marks interconnected with one another, such as in the form of a chain, and where the marks may have a same shape or different shapes.

It is to be noted that the connection path 135 may be displayed such that it is gradually formed in response to the operation of slidably moving the finger F1. Further, the drag operation may be carried out by slidably moving the finger F1 from the mark 131 toward the mark 130. Also in this instance, the display units 136 move from the mark 130 toward the mark 131 along the connection path 135 in accordance with a flow of electric power.

FIG. 6 is a flow chart illustrating an example of a flow of processing in the first particular example. The processing illustrated in FIG. 6 is executed, for example, under the control of the home server 100.

At step ST1, it is decided whether or not a mark on the supply side of electric power (for example, the mark 130) and a mark on the consumption side of electric power (mark 131) are being displayed on the display section 101. In the case where the mark 130 and the mark 131 are not displayed, the processing returns to step ST1 so that the decision process at step ST1 is repeated. In the case where the mark 130 and the mark 131 are being displayed on the display section 101, the processing advances to step ST2.

At step ST2, it is decided whether or not a drag operation is carried out. In particular, it is decided by the home server 100 whether or not the operation signal S3b corresponding to a drag operation is supplied from the display section 101. If a drag operation is not carried out, then the processing returns to step ST2 so that the decision process at step ST2 is repeated. If a drag operation is carried out, then the processing advances to step ST3.

At step ST3, a connection path 135 is displayed on the display section 101 in response to the drag operation. Then, the processing advances to step ST4.

At step ST4, the home server 100 carries out predetermined control in response to the drag operation. Control corresponding to the display substance of the display section 101 is executed by the home server 100. For example, the home server 100 supplies the signal S1 for switching on the switch SW2a to the changeover section 103. The switch SW2a is switched on in response to the signal S1. The electric power P2 is supplied to the television apparatus 120b, and the television apparatus 120b is placed into a standby state. It is to be noted that the switch SW2b remains off.

The substance of the control carried out by the home server 100 in response to the drag operation is not limited to the supply of the electric power P2 to the television apparatus 120b. Control which can be perceived by the user may be carried out by the home server 100. For example, if the switch SW2a is switched on, then the electric power P2 is supplied to the television apparatus 120b. The home server 100 supplies the control signal SlOb for starting up the television apparatus 120b to the load controller 121b. In response to the control signal SlOb, the load controller 121b starts up the television apparatus 120b. Preferably, control which can be perceived by the user in this manner is carried out as a user interface. Next to the process at step ST4, the processing advances to step ST5.

At step ST5, display units 136 which move along the connection path 135 from the mark 130 toward the mark 131 are displayed. The number and moving speed of the display units 136 are set, for example, in response to electric power used by the television apparatus 120b. The display units 136 are displayed based on the set number and moving speed.

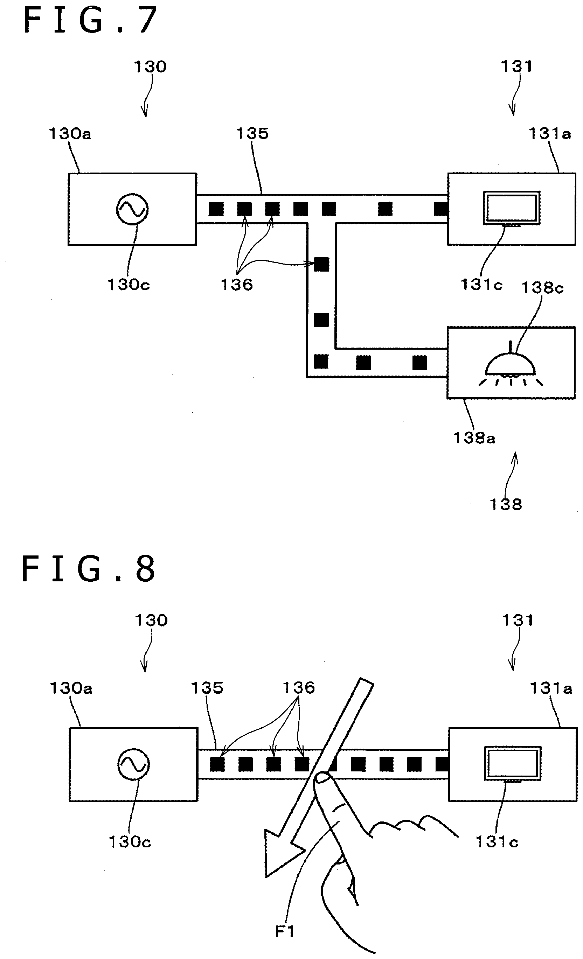

A plurality of marks may be displayed on the electric power consumption side as shown in FIG. 7. For example, a mark 138 corresponding to the lighting system 120c may be displayed. The mark 138 includes a rectangular mark 138a, another mark 138b which models a connection terminal, and a further mark 138c which models the lighting system 120c similarly to the mark 131. In the case where the connection path 135 is displayed, the mark 138b is not displayed.

For example, the connection path 135 is branched in response to a drag operation of connecting the mark 130 and the mark 138. The distal end of the branch of the connection path 135 is connected to the mark 138. By carrying out a drag operation from a start point at a location intermediate of the connection path 135 to an end point at a location in the proximity of the mark 138, a connection path for connecting the mark 130 and the mark 138 may be displayed. The display units 136 move along the displayed connection path. In response to the drag operation, control of turning on the lighting system 120c may be carried out by the home server 100. A connection path which connects the mark 130 and the mark 138 to each other and is independent from the connection path 135 may be displayed. The number of display units which move along the branched connection paths may be set to approximately one half the number of display units which move along the connection path before the branching.

As described above, for example, by carrying out a drag operation, electric power which is an example of a particular substance is supplied from an apparatus on the side which supplies electric power to an apparatus on the side which consumes electric power. It is to be noted that the predetermined substance is not necessarily limited to a tangible object or a substance which can be perceived by a person.

### 1-4. Second Particular Example

Now, a second particular example is described. The following description is given assuming that a mark 130, another mark 131, a connection path 135 which connects the mark 130 and the mark 131 to each other and a plurality of display units 136 which move along the connection path 135 are displayed, for example, as exemplified in FIG. 5.

FIG. 8 illustrates an operation for the display section 101 in the second particular example. For example, an operation of tracing the display section 101 in such a manner as to cut the connection path 135 using, for example, the finger F1 is carried out. This operation is hereinafter referred to suitably as cutting operation or single cutting operation. In response to the cutting operation, the connection path 135 and the display units 136 which move along the connection path 135 are erased and placed into a non-displayed state. The mark 130 and the mark 131 are displayed in a spaced relationship from each other on the display section 101. For example, the mark 130 and the mark 131 are displayed on the display section 101 in a similar manner as in FIG. 3.

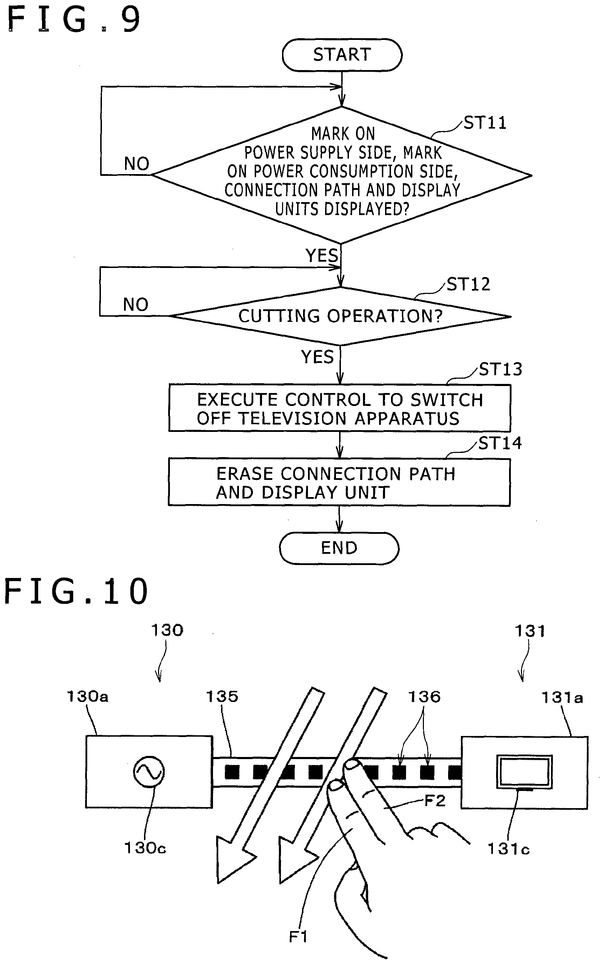

FIG. 9 is a flow chart illustrating an example of a flow of processing in the second particular example. The processing illustrated in FIG. 9 is executed, for example, under the control of the home server 100.

At step ST11, it is decided whether or not a mark on the electric power supply side (for example, the mark 130), a mark on the electric power consumption side (for example, the mark 131), a connection path 135 and a plurality of display units 136 which move along the connection path 135 (suitably referred to as mark 130 and so forth) are being displayed. If the mark 130 and so forth are not being displayed on the display section 101, then the processing returns to step ST11 so that the decision process at step ST11 is repeated. If the mark 130 and so forth are being displayed on the display section 101, then the processing advances to step ST12.

At step ST12, it is decided whether or not a cutting operation is carried out. The home server 100 retains the display position of the connection path 135 on the display section 101. Therefore, the home server 100 can decide whether or not a cutting operation is carried out based on an operation position by the finger F1 indicated by the operation signal S3b and the display position of the connection path 135. If a cutting operation is not carried out, then the processing returns to step ST12 so that the decision process at step ST12 is repeated. If a cutting operation is carried out, then the processing advances to step ST13.

At step ST13, the home server 100 carries out predetermined control in response to the cutting operation. The home server 100 supplies the control signal SlOb for turning off the television apparatus 120b to the load controller 121b on the display section 101. In response to the control signal S10b, the load controller 121b turns off the television apparatus 120b. The television apparatus 120b transits, for example, to a standby state. Then, the processing advances to step ST14.

At step ST14, a display image corresponding to the fact that the supply of electric power to the television apparatus 120b is stopped is displayed. For example, a process of erasing the connection path 135 and the display units 136 from the display section 101 is carried out.

It is to be noted that a plurality of fingers may be used to carry out a cutting operation. For example, two fingers (finger F1 and finger (middle finger) F2) may be used to carry out a cutting operation as illustrated in FIG. 10. A cutting operation wherein two fingers are used is suitably referred to as double cutting operation.

Different controls may be carried out by the home server 100 in response to a single cutting operation and a double cutting operation. For example, control of turning off the television apparatus 120b to place the same into a standby state is carried out in response to a single cutting operation. Control of turning off the television apparatus 120b and besides switching off the switch SW2a may be carried out in response a double cutting operation. Since the switch SW2a is off, the standby power can be eliminated.

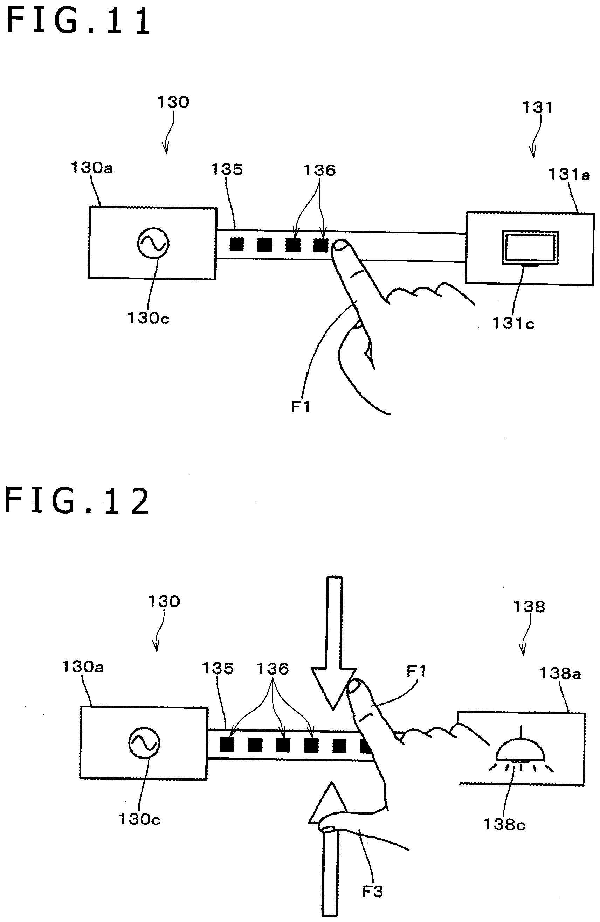

The operation of stopping a flow of electric power on the display section 101 is not limited to such cutting operations. For example, an operation of keeping a predetermined location of the connection path 135 depressed for a predetermined period of time by means of the finger F1 to prevent movement of the display units 136 as shown in FIG. 11 may be carried out. This operation is suitably referred to as holding operation. Movement of the display units 136 is prevented in response to a holding operation and the display units stop. In other words, a manner in which the supply of electric power to the television apparatus stops is displayed. In response to the holding operation, the television apparatus 120b is turned off. Control of switching off the switch SW2a may be carried out.

If the finger F1 is spaced away from the display section 101 to cancel the holding operation, then the display units 136 start movement thereof again. Control of turning on the television apparatus 120b may be carried out by the home server 100 in response to cancellation of the holding operation.

### 1-5. Third Particular Example

Now, a third particular example is described. The following description is given assuming that a mark 130, another mark 138 corresponding to the lighting system 120c, a connection path 135 which connects the mark 130 and the mark 138 to each other and a plurality of display units 136 which move along the connection path 135 are displayed.

FIG. 12 illustrates an operation for the display section 101 in the third particular example. For example, an operation of depressing predetermined positions of the display section 101 by the finger F1 and another finger (thumb) F3 and then moving the two fingers toward each other so as to narrow the width of the connection path 135. This operation is suitably referred to as pinch-in operation. The predetermined positions of the display section 101 depressed by the finger F1 and the finger F3 are set suitably in response to the magnitude and so forth of the display section 101 such as a display region in which the connection path 135 is displayed or a region set in advance around the connection path 135.

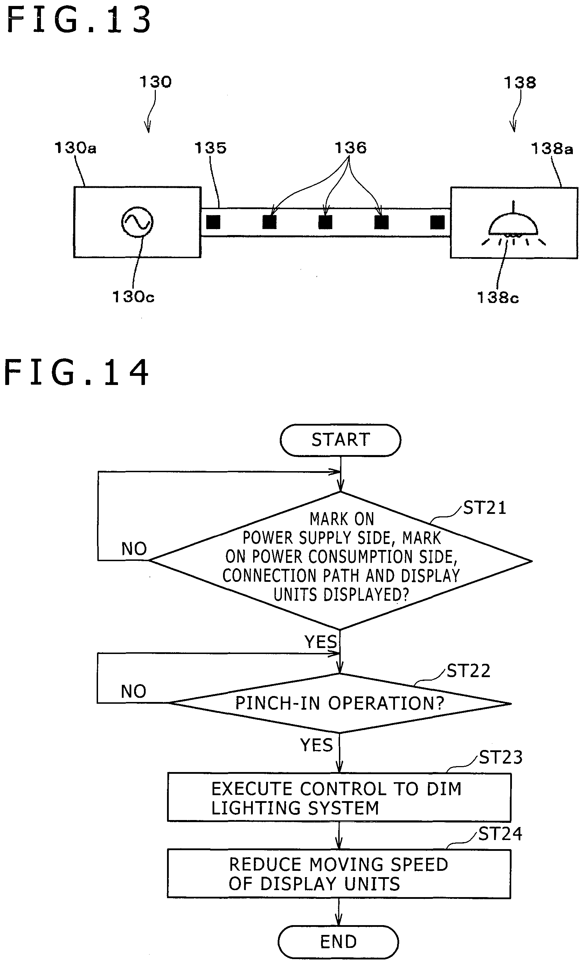

FIG. 13 illustrates an example of a display image in the case in which a pinch-in operation is carried out. In response to a pinch-in operation, for example, the moving speed of the display units 136 decreases. The magnitude of the width of the connection path 135 may be reduced. The displayed number (display distance) of display units 136 may be reduced without changing the moving speed of the display units 136.

FIG. 14 is a flow chart illustrating an example of a flow of processing in the third particular example. The processing illustrated in FIG. 14 is executed, for example, under the control of the home server 100.

At step ST21, it is decided whether or not a mark on the electric power supply side (for example, the mark 130), a mark on the electric power consumption side (for example, the mark 138), a connection path 135 and a plurality of display units 136 which move along the connection path 135 (suitably referred to as mark 130 and so forth) are being displayed on the display section 101. If the mark 130 and so forth are not being displayed on the display section 101, then the processing returns to step ST21 so that the decision process at step ST21 is repeated. If the mark 130 and so forth are being displayed on the display section 101, then the processing advances to step ST22.

At step ST22, it is decided whether or not a pinch-in operation is carried out. The decision of whether or not a pinch-in operation is carried out is carried out by a known method. If a pinch-in operation is not carried out, then the processing returns to step ST22 so that the decision process at step ST22 is repeated. If a pinch-in operation is carried out, then the processing advances to step ST23.

At step ST23, the home server 100 carries out predetermined control in response to the pinch-in operation. The home server 100 carries out, for example, control of decreasing the brightness of the lighting system 120c. The brightness of the lighting system 120c decreases and the power consumption of the lighting system 120c decreases by this control.

The home server 100 supplies the control signal S10c for decreasing the brightness of the lighting system 120c to the load controller 121c. In response to the control signal S10c, the load controller 121c decreases the brightness (luminance) of the lighting system 120c at a predetermined rate. Then, the processing advances to step ST24.

At step ST24, a display image corresponding to the fact that the power consumption decreases is displayed. For example, the moving speed of the display units 136 is decreased. It is to be noted that by which degree the moving speed of the display units 136 is to be changed in response to an increase or decrease of the power consumption can be set suitably in response to the magnitude of the display section 101 and so forth.

If a pinch-in operation is carried out again after a pinch-in operation is carried out once, then control to decrease the brightness of the lighting system 120c further may be carried out. The apparatus on the side on which electric power is consumed is not limited to the lighting system 120c. For example, in the case where the apparatus on the side on which electric power is consumed is the television apparatus 120b, control of decreasing the brightness of the display panel of the television apparatus 120b is carried out in response to a pinch-in operation by the home server 100 and the load controller 121b. By the control of decreasing the brightness of the display panel of the television apparatus 120b, the power consumption of the television apparatus 120b decreases. The moving speed of the display units 136 is reduced further.

For example, in the case where the apparatus on the side on which electric power is consumed is the air-conditioning system 120d which is used as a cooling apparatus, control of raising the set temperature of the air-conditioning system 120d is carried out by the home server 100 and the load controller 121d. By this control, the power consumption of the air-conditioning system 120d decreases. In the case where the air-conditioning system 120d is used as a heating apparatus, control of lowering the set temperature of the air-conditioning system 120d is carried out by the home server 100 and the load controller 121d. By this control the power consumption of the air-conditioning system 120d decreases.

### 1-6. Fourth Particular Example

Now, a fourth particular example is described. The following description is given assuming that, for example, a mark 130, another mark 138 which corresponds to the lighting system 120c, a connection path 135 which connects the mark 130 and the mark 138 to each other and a plurality of display units 136 which move along the connection path 135 are displayed on the display section 101.

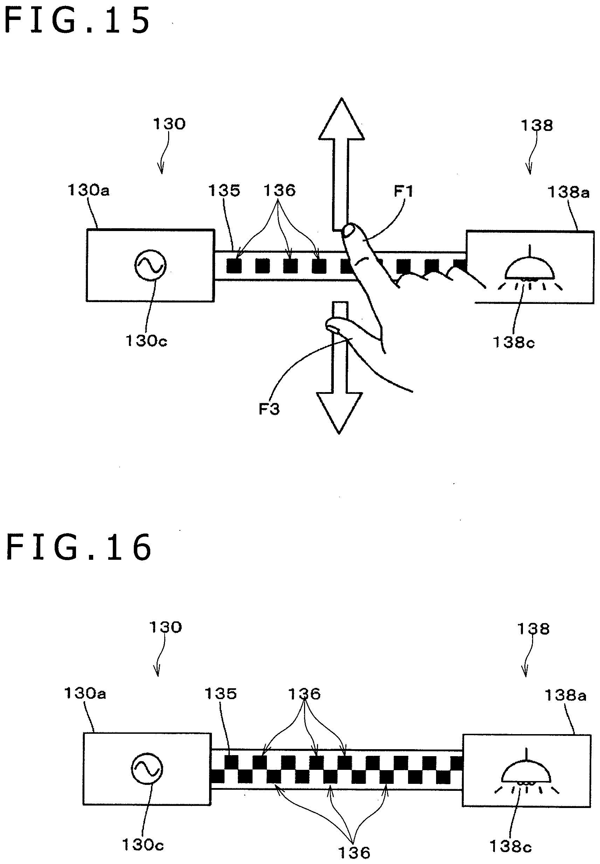

FIG. 15 illustrates an operation for the display section 101 in the fourth particular example. For example, an operation of depressing predetermined positions of the display section 101 by a finger F1 and a finger F3 and moving the two fingers away from each other so as to increase the width of the connection path 135 is carried out. This operation is suitably referred to as pinch-out operation. The predetermined positions of the display section 101 depressed by the finger F1 and the finger F3 are set appropriately in response to the size of the display section 101 and so forth such as a display region in which the connection path 135 is displayed or a region set in advance around the connection path 135.

FIG. 16 shows an example of a display image in the case where a pinch-out operation is carried out. In response to a pinch-out operation, for example, the width of the connection path 135 increases or the moving speed of the display units 136 increases. Further, the number of the moving display units 136 increases. The moving speed of the display units 136 may be increased or the number of the moving display units 136 may be increased without changing the width of the connection path 135.

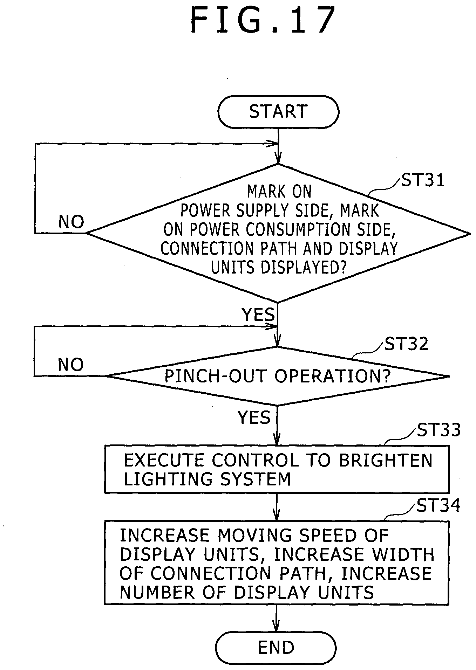

FIG. 17 is a flow chart illustrating an example of a flow of processing in the fourth particular example. The process illustrated in FIG. 17 is executed, for example, under the control of the home server 100.

At step ST31, it is decided whether or not a mark on the electric power supply side (for example, the mark 130), a mark on the electric power consumption side (for example, the mark 138), a connection path 135 and a plurality of display units 136 which move along the connection path 135 (suitably referred to as mark 130 and so forth) are being displayed on the display section 101. If the mark 130 and so forth are not being displayed on the display section 101, then the processing returns to step ST31 so that the decision process at step ST31 is repeated. If the mark 130 and so forth are being displayed on the display section 101, then the processing advances to step ST32.

At step ST32, it is decided whether or not a pinch-out operation is carried out. The decision of whether or not a pinch-out operation is carried out is carried out by a known method. If a pinch-out operation is not carried out, then the processing returns to step ST32 so that the decision process at step ST32 is repeated. If a pinch-out operation is carried out, then the processing advances to step ST33.

At step ST33, the home server 100 carries out predetermined control in response to the pinch-out operation. The home server 100 carries out, for example, control of increasing the brightness of the lighting system 120c. The brightness of the lighting system 120c increases and the power consumption of the lighting system 120c increases by this control.

The home server 100 supplies the control signal SlOc for increasing the brightness of the lighting system 120c to the load controller 121c. In response to the control signal S10c, the load controller 121c increases the brightness (luminance) of the lighting system 120c at a predetermined rate. Then, the processing advances to step ST34.

At step ST34, a display image corresponding to the fact that the power consumption increases is displayed. For example, the width of the connection path 135 is increased or the moving speed of the display units 136 is increased. Further, the displayed number of the moving display units 136 is increased.

If a pinch-out operation is carried out again after a pinch-out operation is carried out once, then control of increasing the brightness of the lighting system 120c further may be carried out. The apparatus on the side on which electric power is consumed is not limited to the lighting system 120c. For example, in the case where the apparatus on the side on which electric power is consumed is the television apparatus 120b, control of increasing the brightness of the display panel of the television apparatus 120b is carried out in response to the pinch-out operation by the home server 100 and the load controller 121b. By the control of increasing the brightness of the display panel of the television apparatus 120b, the power consumption of the television apparatus 120b decreases. The moving speed of the display units 136 is increased further and the displayed number of display units 136 is increased further.

For example, in the case where the apparatus on the side on which electric power is consumed is the air-conditioning system 120d which is used as a cooling apparatus, control of lowering the set temperature of the air-conditioning system 120d is carried out by the home server 100 and the load controller 121d. By this control, the power consumption of the air-conditioning system 120d increases. In the case where the air-conditioning system 120d is used as a heating apparatus, control of raising the set temperature of the air-conditioning system 120d is carried out by the home server 100 and the load controller 121d. By this control, the power consumption of the air-conditioning system 120d increases.

### 1-7. Fifth Particular Example

Now, a fifth particular example is described. In the fifth and succeeding particular examples, the display manner of marks is different from that of the mark 130 and so forth described hereinabove.

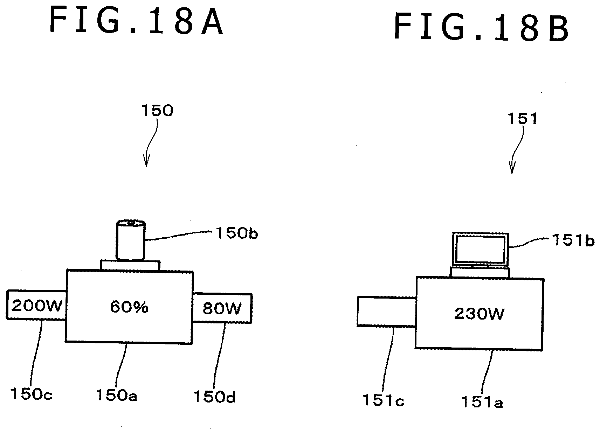

FIG. 18A shows an example of a mark 150 corresponding to the power storage apparatus 102. The mark 150 includes, for example, a rectangular mark 150a. A mark 150b of a cell which models the power storage apparatus 102 is displayed above the mark 150a. The power storage apparatus 102 is an apparatus which supplies electric power and is also an apparatus to which electric power is supplied. Accordingly, a mark 150c and another mark 150d which model two connection terminals are displayed. The mark 150c and the mark 150d are displayed, for example, at the opposite ends of the mark 150a.

In the inside of the mark 150a, for example, a ratio of the remaining capacity of the power storage apparatus 102 (for example, 60%) is displayed. The home server 100 can acquire information regarding the ratio of the remaining capacity of the power storage apparatus 102 through communication with the power storage controller 110 of the power storage apparatus 102. The home server 100 carries out control of displaying the ratio of the remaining capacity of the power storage apparatus 102 on the display section 101 based on the acquired information.

In the inside of the mark 150c, the total value (for example, 200 W (watt)) of electric power supplied, for example, to the power storage apparatus 102 (the electric power P2, electric power P3 and electric power P4) is displayed. The value of the electric power P2 is a value set in response to the number of loads connected to the line L1, a contract between the user and the power company and so forth, and this value is retained, for example, in a RAM or the like which the home server 100 has.

The home server 100 acquires a value of the electric power P3 indicated by the signal S4 through communication with the power conditioner 105. The home server 100 acquires the value of the electric power P4 indicated by the signal S5 through communication with the power conditioner 106. The home server 100 controls the display image of the numerical value to be displayed in the inside of the mark 150c based on information regarding the electric power.

In the mark 150d, the total value (for example, 80 W) of power consumption of the loads 120 connected to the power storage apparatus 102 is displayed. The home server 100 acquires power consumption at present of the loads 120 through communication with the load controllers 121. The home server 100 determines the total value of the power consumption at present of the loads 120 and carries out control of displaying the total value in the inside of the mark 150d. It is to be noted that the numerical values displayed in the inside of the mark 150a, mark 150c and mark 150d are variable.

FIG. 18B shows an example of a mark 151 corresponding to the television apparatus 120b. The mark 151 includes, for example, a rectangular mark 151a. A mark 151b which models the television apparatus 120b is displayed above the mark 151a. The television apparatus 120b is an apparatus to which electric power is supplied. Accordingly, one mark 151c which models a connection terminal is displayed. The mark 151c is displayed, for example, on the left side of the mark 151a.

In the inside of the mark 151a, power consumption of an apparatus to which the mark 151 corresponds is displayed. For example, power consumption at present of the television apparatus 120b (for example, 230 W) is displayed. The home server 100 acquires the power consumption at present of the load 120 through communication with the load controller 121. The home server 100 carries out control of displaying information of the acquired power consumption in the inside of the mark 151a. It is to be noted that the power consumption of the television apparatus 120b varies in response to a situation or setting of operation of the television apparatus 120b. Therefore, also the numerical value to be displayed in the inside of the mark 151a is variable.

In most electronic apparatus in recent years, a mode (power save mode) in which the power consumption of the electronic apparatus can be set low can be set. If the power save mode is set, then the numerical value in the inside of the mark 151a becomes lower than 230 W.

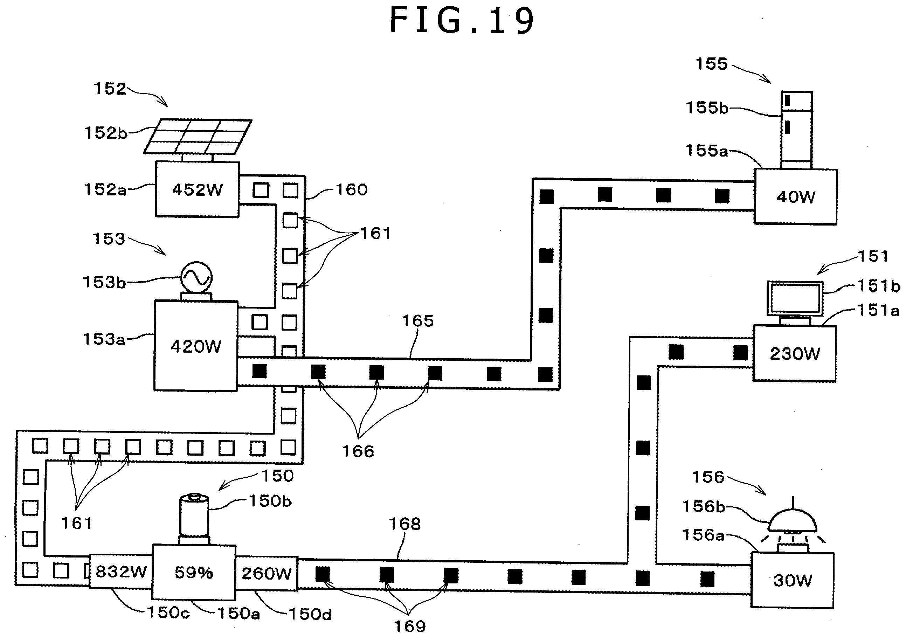

FIG. 19 shows an example of a display image of the display section 101 in the fifth particular example. On the display section 101, a mark 152 corresponding to the solar power generation apparatus 3 is displayed. The mark 152 includes a rectangular mark 152a, and a mark 152b which is displayed above the mark 152a and models a solar panel. In the inside of the mark 152a, a supply amount of electric power at present from the solar power generation apparatus 3 (for example, 452 W) is displayed.

On the display section 101, a mark 153 corresponding to the power grid 2 is displayed. The mark 153 includes a rectangular mark 153a, and a mark 153b displayed above the mark 153a and modeling the power grid 2 (AC voltage source). In the inside of the mark 153a, a supply amount of electric power at present from the power grid 2 (for example, 420 W) is displayed. It is to be noted that the electric power supplied from the power grid 2 can be supplied to the power storage apparatus 102 and the changeover section 103. Therefore, from the right side of the mark 153a, two connection paths independent of each other (a connection path 160 and another connection path 165 hereinafter described) extend.

On the display section 101, a mark 150 corresponding to the power storage apparatus 102 is displayed. In the display section 101, a mark 151 corresponding to the television apparatus 120b is displayed. The mark 150 and the mark 151 are described hereinabove, and therefore, overlapping description of them is omitted.

A mark 155 corresponding to the refrigerator 120a is displayed on the display section 101. The mark 150 includes a rectangular mark 155a, and a mark 155b displayed above the mark 155a and modeling the refrigerator 120a. In the inside of the mark 155a, power consumption at present of the refrigerator 120a (for example, 40 W) is displayed.

On the display section 101, a mark 156 corresponding to the lighting system 120c is displayed. The mark 156 includes a mark 156a, and a mark 156b displayed above the mark 156a and modeling the lighting system 120c. In the inside of the mark 156a, power consumption at present of the lighting system 120c (for example, 30 W) is displayed.

On the display section 101, a plurality of connection paths are displayed. For example, a connection path 160 for connecting the mark 152 and mark 153 and the mark 150 is displayed. A plurality of display units 161 move from the mark 152 toward the mark 150 along the connection path 160. Further, a plurality of display units 161 move from the mark 153 toward the mark 150 along the connection path 160.

A connection path 165 for connecting the mark 153 and the mark 155 is displayed. A plurality of display units 166 move from the mark 153 toward the mark 155 along the connection path 165.

A connection path 168 for connecting the mark 150 and the mark 151 and mark 156 is displayed. The connection path 168 is branched midway and is connected to the mark 151 and the mark 156. Display units 169 move from the mark 150 toward the mark 151 and the mark 156 along the connection path 168. It is to be noted that the display units 161 which move toward the mark 150 which corresponds to the power storage apparatus 102 and the display units 169 which move toward the marks (for example, the mark 151, mark 155 and mark 156) which correspond to the loads 120 may be displayed in colors different from each other.

By the display image which is exemplified in FIG. 19, a manner in which electric power is supplied from the solar power generation apparatus 3 and the power grid 2 to the power storage apparatus 102 is displayed. Further, a manner in which electric power supplied from the power grid 2 is supplied to the refrigerator 120a is displayed. Furthermore, a manner in which the electric power P5 supplied from the power storage apparatus 102 is supplied to the television apparatus 120b and the lighting system 120c is displayed.

It is to be noted that, the display positions of the marks on the display section 101 can be changed suitably. However, preferably a flow of electric power is taken into consideration such that marks on the side which supplies electric power are displayed in the proximity of one side (for example, the left side) of the display section 101 while marks on the side which consumes electric power are displayed on the other side (for example, on the right side) of the display section 101.

It is to be noted that a mark corresponding to the wind power generation apparatus 4 is not displayed. This signifies that, for example, it is calm and the generated electric amount of the wind power generation apparatus 4 is small. A generator which does not exhibit a generated power amount higher than a fixed level may not be displayed on the display section 101 in this manner. A mark corresponding to the wind power generation apparatus 4 may be displayed otherwise together with the numerical value of 0 W.

An on or off state of the switches SW corresponding to the display image of FIG. 19 is described. On the display section 101, a manner in which electric power flows from the mark 153 which corresponds to the power grid 2 to the mark 155 which corresponds to the refrigerator 120a is displayed. The switches SW are switched on/off so as to correspond to the display image. In particular, the switch SW1a in the changeover section 103 is switched on and the switch SWlb is switched off.

On the display section 101, a manner in which electric power flows from the mark 150 corresponding to the power storage apparatus 102 toward the mark 151 corresponding to the television apparatus 120b and the mark 156 corresponding to the lighting system 120c is displayed. The switch SW2a in the changeover section 103 is off and the switch SW2b is on. Further, the switch SW3a in the changeover section 103 is off and the switch SW3b is on. It is to be noted that a flow of electric power to the air-conditioning system 120d is not displayed on the display section 101. Therefore, the switch SW4a and the switch SW4b are off.

Electric power of, for example, 452 W is supplied from the solar power generation apparatus 3 to the power storage apparatus 102. Corresponding to this, 452 W is displayed in the inside of the mark 152a. From the power grid 2, electric power of 420 W is supplied, and from within the electric power, electric power of 40 W is consumed by the refrigerator 120a and the remaining electric power of 380 W is supplied to the power storage apparatus 102. Corresponding to this, 420 W is displayed in the inside of the mark 153a, and 40 W is displayed in the inside of the mark 155a. In the inside of the mark 150c, 832 W which is the total value (452 + 380) of the supply amounts of the electric power is displayed. In the inside of the mark 150a, a rate of the total of the remaining amount of the power storage apparatus 102 (for example, 59%) is displayed.

By the television apparatus 120b, electric power of, for example, 230 W is consumed, and by the lighting system 120c, electric power of, for example, 30 W is consumed. Corresponding to this, 230 W is displayed in the inside of the mark 151a, and 30 W is displayed in the mark 156a. In the inside of the mark 150d, 260 W which is the total value (230 + 30) of the power consumption of the television apparatus 120b and the power consumption of the lighting system 120c is displayed.

Incidentally, from the display image of FIG. 19, it can be recognized that the electric power (452 W) supplied from the solar power generation apparatus 3 is higher than the total value (300 W) of the power consumption of the load 120. Further, also the remaining capacity of the power storage apparatus 102 is not small. In such an instance as just described, that the electric power supplied from the power grid 2 is not used while the electric power supplied from the solar power generation apparatus 3, or in other words, the electric power from the power storage apparatus 102, is used, is preferable from a point of view of the expense and the energy saving. In the fifth particular example, the supply source of electric power can be changed over in response to an operation for the display section 101.

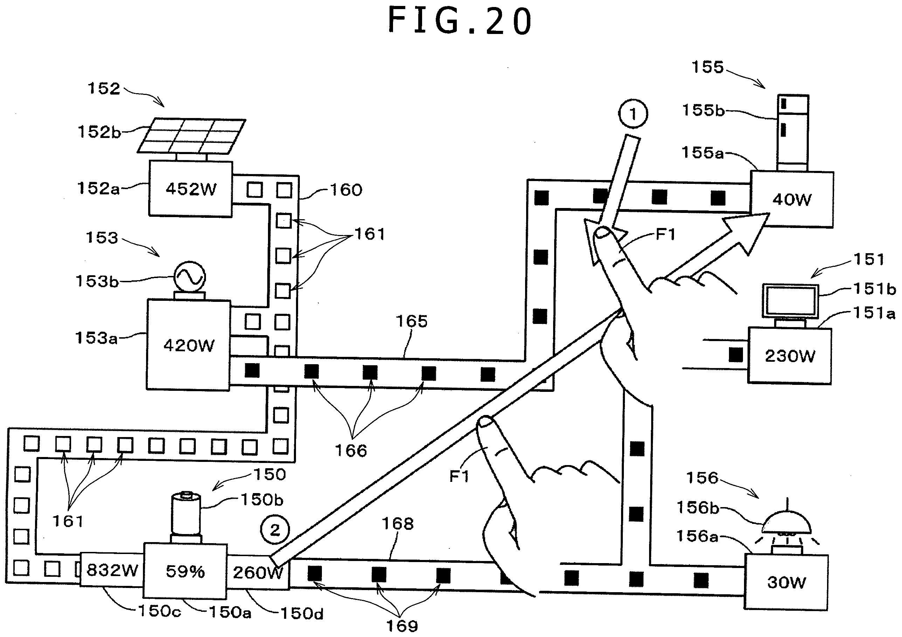

FIG. 20 illustrates an operation in the fifth particular example. In the fifth particular example, a plurality of operations are carried out successively. For example, a (single) cutting operation for the connection path 165 is carried out first. Then, a drag operation of connecting a location of the mark 150d, for example, in the proximity of the mark 150d and, for example, the mark 155a of the mark 150 to each other is carried out.

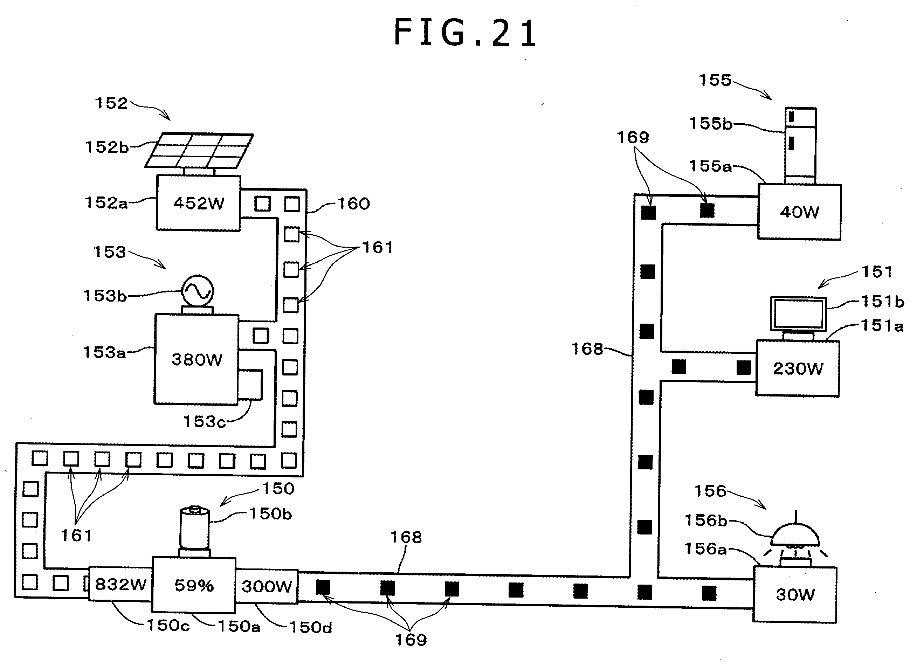

FIG. 21 shows an example of a display image after the operation. In response to the cutting operation, the connection path 165 and the display units 166 which move along the connection path 165 are erased from the display section 101 and placed into a non-displayed state. It is to be noted that, the mark 153c modeling a connection terminal is displayed with the mark 153, in response to the placement of the connection path 165 into a non-displayed state, the mark 153c may not be displayed.

In response to the drag operation, a connection path which connects the mark 150 and the mark 155 to each other is displayed. For example, a display image in which the connection path 168 is extended and is connected to the mark 155a is displayed. Then, the display units 169 move so as to further proceed to the mark 155.

The load 120 which uses electric power supplied from the power grid 2 disappears. It is to be noted that, since the mark 153 and the mark 150 are connected to each other, supply of electric power of, for example, 380 W from the power grid 2 to the power storage apparatus 102 continues. Corresponding to this, 380 W is displayed in the inside of the mark 153a. Corresponding to this, 832 W is displayed in the inside of the mark 150c. To the refrigerator 120a, electric power is supplied from the power storage apparatus 102. Therefore, 300 W (30 + 230 + 40) is displayed in the inside of the mark 150d. It is to be noted that, in the case where supply of electric power from the power grid 2 to the power storage apparatus 102 is to be stopped, a cutting operation may be carried out for the proximity of a location of the connection path 160 connected to the mark 153.

In response to a cutting operation and a drag operation, the home server 100 supplies the signal S1 to the changeover section 103 to control the switches SW of the changeover section 103 on/off. The home server 100 supplies the signal S1 for switching off the switch SW1a and switching on the switch SWlb to the changeover section 103. It is to be noted that, in order to prevent instantaneous occurrence of a state in which power is not supplied, the switch SW1a may be switched off after both of the switch SW1a and the switch SWlb are switched on. A configuration wherein a power storage section is connected between the switch SW1a and switch SWlb and the refrigerator 120a may be adopted such that electric power is always supplied to the refrigerator 120a.

In this manner, while a display image of a generated power amount of the solar power generation apparatus 3 is confirmed, the supply source (for example, the power grid 2 and the power storage apparatus 102) of electric power to the loads 120 can be changed over simply. Therefore, for example, saving of energy and the power charge can be anticipated.

### 1-8. Sixth Particular Example

Now, a sixth particular example is described. The description is given assuming that the display substance same as the display substance exemplified in FIG. 21 is displayed.

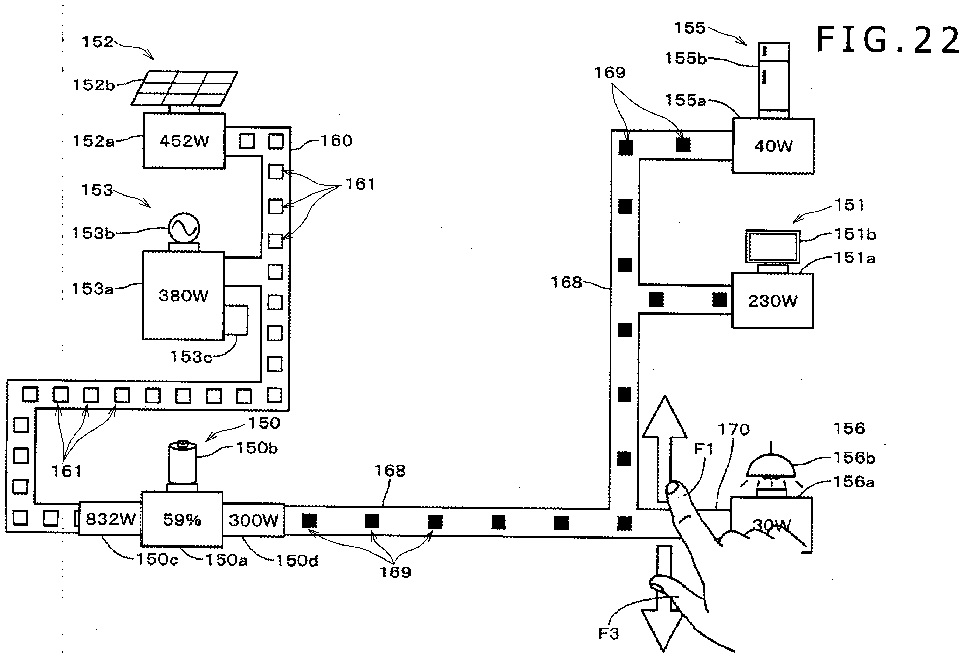

FIG. 22 illustrates an operation in the sixth particular example. A pinch-out operation using the finger F1 and the finger F3 is carried out for a location of the connection path 168 in the proximity of the mark 156 (for the convenience of description, a reference numeral 170 is applied).

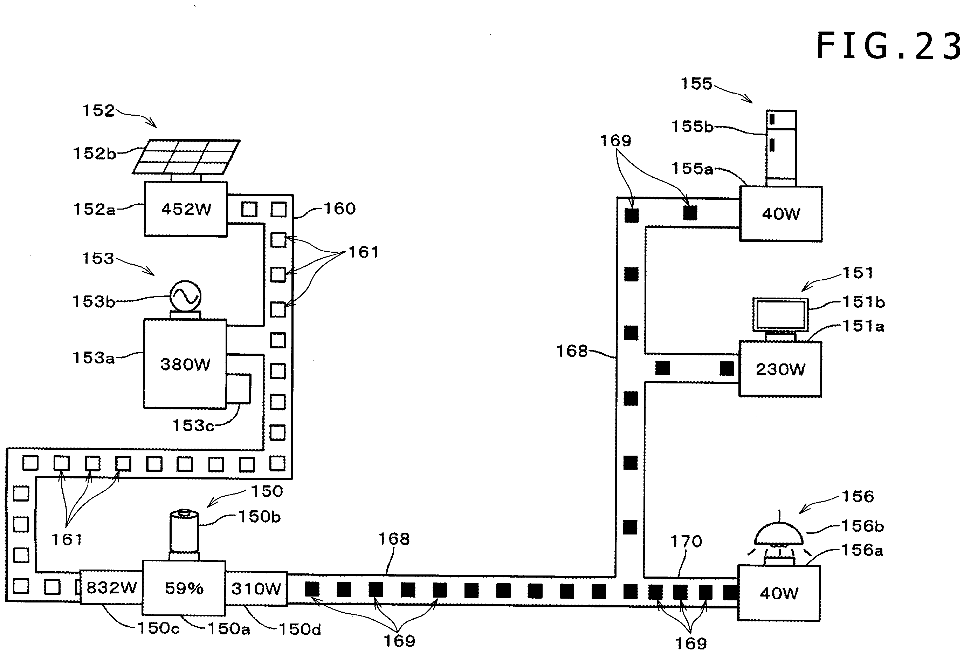

FIG. 23 shows an example of a display image after the pinch-out operation. In response to the pinch-out operation, the moving speed of the display units 169 which move along the connection path 170 of the connection path 168 increases. It is to be noted that the moving speed of the other display units 169 which move along the connection path 168 does not vary.

The home server 100 supplies the control signal S10c for increasing the illuminance of the lighting system 120c to the load controller 121c in response to the pinch-out operation. In response to the control signal S10c, the load controller 121c carries out control of increasing the illuminance of the lighting system 120c. In accordance with this control, the power consumption of the lighting system 120c increases, for example, from 30 W to 40 W. Therefore, the numerical value displayed in the inside of the mark 156a of the display section 101 changes from 30 W to 40 W. Together with this, the numerical value displayed in the inside of the mark 150d changes from 300 W to 310 W.

In this manner, the magnitude of the moving speed of the display units can be varied in response to the use mode for each load 120 (for example, a usual use mode, a use mode in a power saving mode, or a display mode in which the power consumption increases by quick freezing of the refrigerator or increase of the illuminance of the lighting apparatus). If an unnecessarily large amount of electric power is used, then the user can carry out, for example, a pinch-in operation to decrease the power consumption of the apparatus corresponding to the mark.

### <2. Modifications>

While the embodiment of the present disclosure is described above, the present disclosure is not limited to the embodiment described above but can be modified in various manners.

### 2-1. About Portable Terminal

While it is described in the description of the embodiment of the present disclosure that an operation is carried out for the display section 101 which the control apparatus 1 has, a process similar to the process described hereinabove may be carried out by carrying out an operation for a display apparatus of the portable terminal 200. In other words, the portable terminal 200 may be configured as a control apparatus.

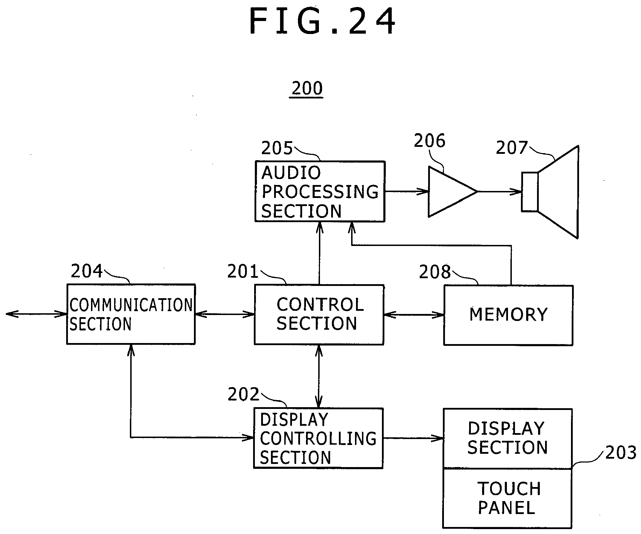

FIG. 24 shows an example of principal components of the portable terminal 200. The portable terminal 200 is configured including, for example, a control section 201, a display controlling section 202, a display section 203, a communication section 204, an audio processing section 205, an amplifier 206, a speaker 207 and a memory 208. The display section 203 is configured as a touch panel which allows an operation for the display section 203 thereof. It is to be noted that, in FIG. 24, a flow of a control signal or data is indicated by an arrow mark of a solid line.

The control section 201 is configured, for example, from a CPU and controls the components of the portable terminal 200. The display controlling section 202 has a function substantially same as the display controlling function of the home server 100. In particular, the display controlling section 202 operates such that a display image is displayed based on display data received by the communication section 204. As the display controlling section 202 operates, marks and a connection path described hereinabove in connection with the embodiment are displayed on the display section 203. It is to be noted that the control section 201 may be configured such that the function of the display controlling section 202 is incorporated therein.

The display section 203 is configured from an LCD panel, an organic EL panel or the like. The display section 203 is configured as a touch panel, for example, of the capacitance type. Naturally, a touch panel of the resistive film type, the optical type or the like may be used.

The communication section 204 communicates with a different apparatus (for example, the home server 100 of the control apparatus 1). For example, a request signal for requesting display data is transmitted from the portable terminal 200 to the home server through the communication section 204. In response to the request signal, predetermined display data is transmitted from the home server 100.

The portable terminal 200 has a function of reproducing audio data. The audio processing section 205 carries out various signal processes for audio data inputted to the audio processing section 205. For example, audio data stored in the memory 208 are inputted to the audio processing section 205. The audio processing section 205 carries out, for example, an FFT process, a digital filtering process, a deinterleave process, a decoding process, a level control process, a DAC (Digital to Analog Converter) process of converting a digital signal for which those processes have been carried out into an analog signal, and so forth.

The amplifier 206 amplifies audio data supplied thereto from the audio processing section 205 with a predetermined amplification ratio. The amplifier 206 may be configured from a digital amplifier. The audio data amplified by the amplifier 206 are reproduced from the speaker 207.

The memory 208 is configured from a memory, for example, of the nonvolatile type, and various programs and data are stored into the memory 208. For example, programs which are executed by the control section 201 and the display controlling section 202 are stored into the memory 208. The memory 208 may be used as a working memory when processing is executed. An application downloaded through the communication section 204 may be stored into the memory 208. The memory 208 may be a memory which is removably loaded into the portable terminal 200. Audio data or data of a still picture may be stored into the memory 208.

It is to be noted that the configuration of the portable terminal 200 described above is an example and the configuration of the portable terminal 200 is not limited to this. For example, the portable terminal 200 may be configured such that it has an image pickup function and so forth.

An example of operation of the portable terminal 200 is described. The display controlling section 202 of the portable terminal 200 displays a mark on the side which supplies electric power to the display section 203, a mark on the side which consumes electric power and so forth, for example, in accordance with a predetermined display controlling program. The display controlling program is transmitted from the control apparatus 1 to the portable terminal 200 through communication carried out, for example, between the control apparatus 1 and the portable terminal 200. The display controlling program is temporarily stored into a memory (not shown) which the display controlling section 202 has.

It is to be noted that, as the method for communication carried out between the control apparatus 1 and the portable terminal 200, for example, communication which uses infrared rays, communication in accordance with the "Zigbee (registered trademark)" standards, communication in accordance with the "Bluetooth (registered trademark)" standards, communication in accordance with "Wi-Fi (registered trademark)" by which network formation is easy, and like communication can be utilized. Naturally, the communication is not limited to those according to the exemplified standards. Naturally, the communication is not limited to short-range wireless communication but may be communication through a network such as the Internet.

Such operations as a drag operation, a cutting operation, a pinch-in operation and a pinch-out operation can be carried out for the display section 203. The display controlling section 202 controls the display section 203 so that a display image is displayed in response to an operation. Further, the display controlling section 202 generates an operation signal in response to an operation and converts the operation signal into that of a predetermined format. The converted operation signal is transmitted to the home server 100 through the communication section 204.

The home server 100 controls the switches SW of the changeover section 103 or the load controller 121 suitably in response to an operation signal transmitted thereto from the portable terminal 200. It is to be noted that the substance of particular processes corresponding to the operations is described in the foregoing description of the embodiment, and therefore, overlapping description is omitted.

In this manner, such operations as a drag operation may be carried out for the display section of a portable terminal. The portable terminal can be utilized as an apparatus which controls the flow of electric power, for example, in a smart house.

### 2-2. Other Modifications

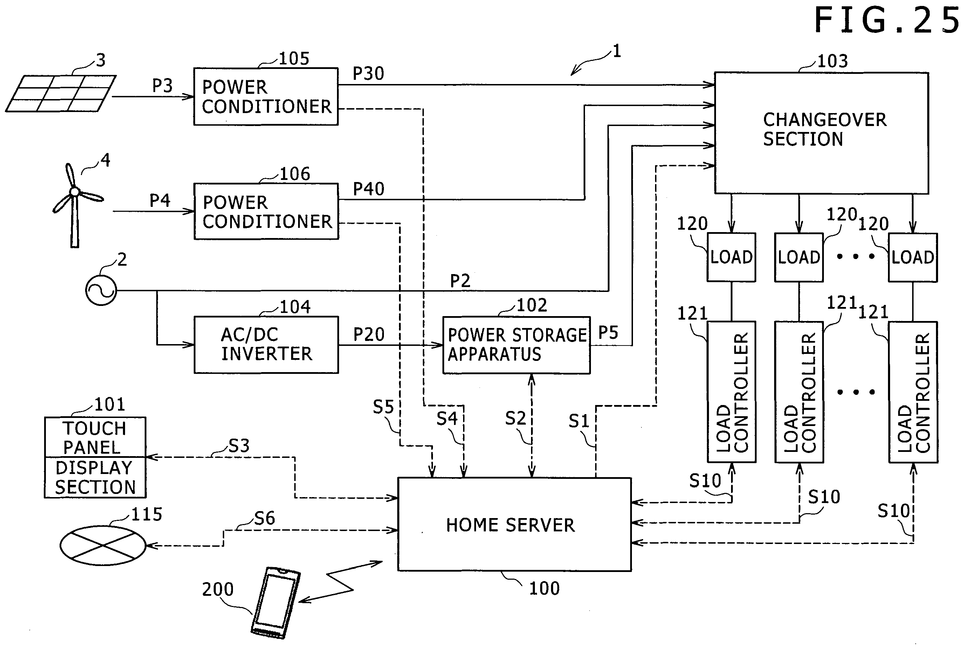

Other modifications are described. As illustrated in FIG. 25, the electric power P30 outputted from the power conditioner 105 and the electric power P40 outputted from the power conditioner 106 may be supplied to the changeover section 103 without intervention of the power storage apparatus 102. In other words, the electric power P30, electric power P40, electric power P2 from the power grid 2 and electric power P5 from the power storage apparatus 102 may be supplied to the changeover section 103.

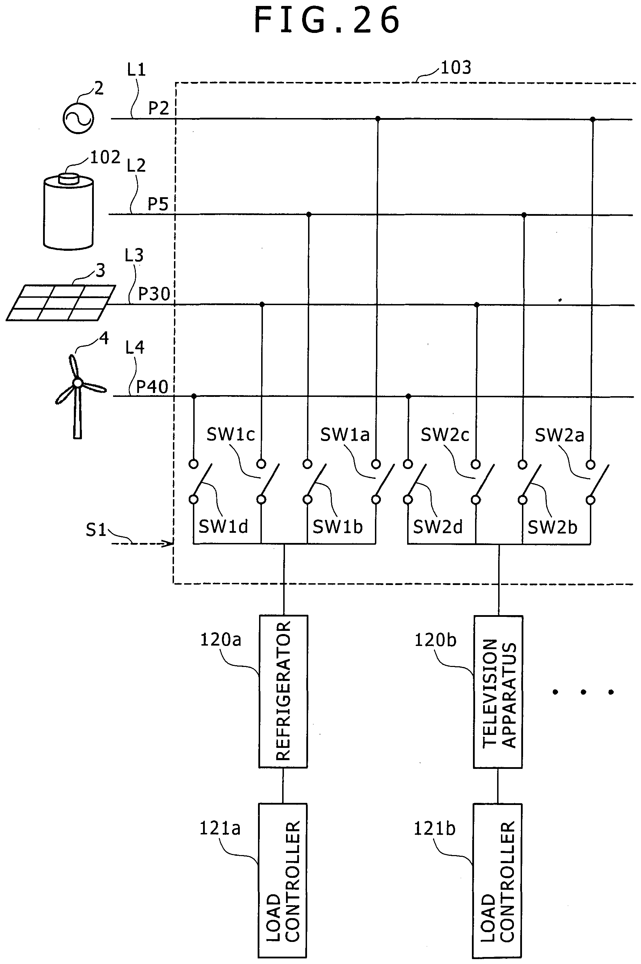

FIG. 26 shows an example of a configuration of the changeover section 103 according to a modification. In addition to the line L1 and the line L2, a line L3 for transmitting the electric power P30 and a line L4 for transmitting the electric power P40 are provided. The loads are connected to the line L3 and the line L4 through switches SW. For example, the refrigerator 120a is connected to the line L3 through a switch 1c and connected to the line L4 through another switch 1d. For example, the television apparatus 120b is connected to the line L3 through a switch 2c and connected to the line L4 through a switch 2d. Though not shown, also the lighting system 120c and the air-conditioning system 120d are connected to the line L3 and the line L4 through predetermined switches SW.

When the refrigerator 120a is to be driven by the electric power P30 based on electric power generated by the solar power generation apparatus 3, the switch SWlc is switched on while the other switches (switch SWla, switch SWlb and switch SW1d) are switched off. When the refrigerator 120a is to be driven by the electric power P40 based on electric power of the wind power generation apparatus 4, the switch SWld is switched on while the other switches (switch SW1a, switch SWlb and switch SW1c) are switched off.

It is to be noted that electric power to be used on the load side may be controlled in response to electric power which can be supplied (for example, the magnitude of the generated power amount at present). For example, an example wherein the refrigerator 120a is driven by the electric power P30 is described. Electric power which can be supplied by the solar power generation apparatus 3 (for example, the generated power amount at present) is supplied as the signal S4 to the home server 100. The home server 100 may control the load controller 121a of the refrigerator 120a such that, in the case where the generated power amount indicated by the signal S4 is, for example, equal to or higher than a threshold value, the refrigerator 120a is driven in a normal mode, but in the case where the generated power amount is lower than the threshold value, the refrigerator 120a is driven in a power saving mode. In the case where the generated power amount indicated by the signal S4 drops further, the control may be carried out such that electric power is supplied from the power grid 2 to the refrigerator 120a.

For example, an example wherein the air-conditioning system 120d is driven as a refrigerating apparatus by the electric power P30 is described. Electric power which can be supplied by the solar power generation apparatus 3 (for example, the generated power amount at present) is supplied as the signal S4 to the home server 100. In the case where the generated power amount indicated by the wind power generation apparatus 4 is, for example, higher than a threshold value, the set temperature of the air-conditioning system 120d is lowered to drive the air-conditioning system 120d. In other words, the cooling power is increased. In the case where the generated power amount indicated by the signal S4 is, for example, lower than the threshold value, the set temperature of the air-conditioning system 120d is raised to drive the air-conditioning system 120d. In other words, the cooling power is decreased. In this manner, operation of a load may be controlled automatically in response to the generated power amount at present. This control may be carried out automatically, for example, when an instruction is issued by the user to drive the air-conditioning system 120d as a refrigeration unit by the electric power P30.

The display section 101 is not necessarily configured as a touch panel. The control apparatus 1 is configured, for example, as a personal computer which has a mouse. A pointer which moves based on an operation of the mouse may be displayed on the display section 101 such that an operation similar to a drag operation or the like is carried out by moving the pointer. Further, a drag operation may be carried out in response to voice. However, in this instance, it is necessary for the control apparatus 1 to have a processing block which carries out speech recognition.

The control corresponding to a drag operation, a pinch-in operation or the like is an example. Control different from the exemplified control may be carried out in response to each operation. Further, the generated power amount or the power consumption may be indicated, for example, by the magnitude of a mark in place of a numerical value. For example, control of displaying a mark corresponding to a power generating apparatus which exhibits a great generated power amount or an apparatus which exhibits high power consumption in a large size and decreasing the size of the mark in response to decrease of the generated power amount or the power consumption may be carried out.

Although the present disclosure is preferably applied to a flow of energy (electric power), it can be applied to control for other flows. In particular, the substance of the present disclosure can be applied to a system which includes a sending party and a receiving party and in which a predetermined substance is transferred between the sending party and the receiving party.

For example, a mark which models a stopcock for gas and another mark which models a stove burner may be displayed such that gas is supplied to the burner by carrying out a drag operation for both marks. A mark which models a water faucet and another mark which models a bath may be displayed such that water is supplied into the bath by carrying out a dragging operation for both marks. In the case where the present disclosure is applied to a system of a greater scale, for example, a mark which models a river and another mark which models a field reservoir are displayed. In response to a drag operation, for example, control of opening a water gate may be carried out such that water of the river is supplied to the field reservoir. The flow rate of water from the river to the field reservoir may be controlled in response to a pinch-in operation or a pinch-out operation.

The substance which is transferred between the sender side and the receiver side may be data (for example, digital data). For example, in response to a cutting operation for a supply path of digital data, supply of digital data is stopped, and the supply of digital data can be stopped. In response to a pinch-out operation for the supply path of digital data, for example, the bit rate may be increased such that a process for higher picture quality or higher sound quality is carried out by an apparatus of the receiver side. In this manner, the substance of the present disclosure can be applied in various manners.

Further, the present disclosure is not limited to an apparatus but can be implemented as a method, a program or a recording medium in which a program is recorded.

It is to be noted that the components and the processes in the embodiment and the modifications can be combined suitably within a range within which no technical contradiction arises. The orders of the processes in the flows of the exemplified processes can be suitably changed within a range within which no technical contradiction arises.

The present disclosure can be applied also to a crowd system wherein the exemplified processes are executed in a distributed manner by a plurality of apparatus. The present disclosure can be implemented as an apparatus which is a system in which the exemplified processes are executed and in which at least some of the exemplified process are executed.

The present disclosure can assume also the following configurations.
(1) A display controlling apparatus, wherein
   at least a first mark and a second mark are displayed on a display section; and
   a connection path which connects the first mark and the second mark to each other and display units which move from the first mark toward the second mark along the connection path are displayed on the display section in response to an operation for connecting the first mark and the second mark to each other.
(2) A display controlling apparatus, wherein
   at least a first mark, a second mark, a connection path which connects the first mark and the second mark to each other and display units which move from the first mark toward the second mark along the connection path are displayed on a display section; and
   a display mode of at least one of the connection path and the display units is changed in response to a predetermined operation for the connection path.
(3) The display controlling apparatus according to (2), wherein the connection path and the display units are placed into a non-displayed state in response to an operation for blocking the connection path.
(4) The display controlling apparatus according to (2), wherein the display units being moved stop in response to an operation for depressing a predetermined portion of the connection path.
(5) The display controlling apparatus according to (2), wherein at least one of a moving speed of the display units and the displayed number of display units is varied in response to an operation for changing the width of the connection path.
(6) The display controlling apparatus according to (5), wherein the moving speed of the display units is decreased in response to an operation for reducing the width of the connection path.
(7) The display controlling apparatus according to (5), wherein the moving speed of the display units is increased in response to an operation for increasing the width of the connection path.
(8) The display controlling apparatus according to any one of (1) to (7), wherein the second mark includes a mark indicative of an apparatus corresponding to the second mark.
(9) The display controlling apparatus according to any one of (1) to (8), wherein the second mark is displayed such that a power consumption amount at present of an apparatus corresponding to the second mark is indicated.
(10) The display controlling apparatus according to any one of (1) to (9), wherein
   the display section is configured as a touch panel; and
   the predetermined operation is carried out using one or a plurality of fingers of a user.
(11) A display controlling method for a display controlling apparatus, including:
   displaying at least a first mark and a second mark on a display section; and
   displaying, in response to an operation for connecting the first mark and the second mark to each other, a connection path which connects the first mark and the second mark to each other and display units which move from the first mark toward the second mark along the connection path on the display section.
(12) A program for causing a computer to execute a display controlling method for a display controlling apparatus, the controlling method including:
   displaying at least a first mark and a second mark on a display section; and
   displaying, in response to an operation for connecting the first mark and the second mark to each other, a connection path which connects the first mark and the second mark to each other and display units which move from the first mark toward the second mark along the connection path on the display section.
(13) A display controlling method for a display controlling apparatus, including:
   displaying at least a first mark, a second mark, a connection path which connects the first mark and the second mark to each other and display units which move from the first mark toward the second mark along the connection path on a display section; and
   changing a display mode of at least one of the connection path and the display units in response to a predetermined operation for the connection path.
(14) A program for causing a computer to execute a display controlling method for a display controlling apparatus, the controlling method including:
   displaying at least a first mark, a second mark, a connection path which connects the first mark and the second mark to each other and display units which move from the first mark toward the second mark along the connection path on a display section; and
   changing a display mode of at least one of the connection path and the display units in response to a predetermined operation for the connection path.
(15) A control apparatus, which carries out, in response to an operation for connecting a first mark and a second mark displayed on a display section to each other, control to supply a predetermined substance from an apparatus which corresponds to the first mark to another apparatus which corresponds to the second mark.
(16) A control apparatus, wherein a connection path which connects a first mark and a second mark to each other and along which display units move from the first mark toward the second mark is displayed on a display section,
   the control apparatus controlling supply of a predetermined substance from an apparatus which corresponds to the first mark to another apparatus which corresponds to the second mark in response to an operation for at least one of the connection path and the display units.
(17) The control apparatus according to (15) or (16), wherein the predetermined substance is electric power.
(18) A control apparatus, which controls, in response to an operation for connecting a first mark and a second mark displayed on a display section to each other, operation of an apparatus which corresponds to the second mark.
(19) A control apparatus, wherein a connection path which connects a first mark and a second mark to each other and along which display units move from the first mark toward the second mark is displayed on a display section,
   the control apparatus controlling operation of at least one of an apparatus which corresponds to the first mark and another apparatus which corresponds to the second mark in response to an operation for at least one of the connection path and the display units.

### [Reference Signs List]

- 1: Control apparatus
- 100: Home server
- 101: Display section (touch panel)
- 102: Power storage apparatus
- 103: Changeover section
- 120: Load
- 121: Load controller
- 130: Mark
- 131: Mark
- 135: Connection path
- 136: Display unit
- F1, F2, F3: Finger
- 200: Portable terminal
- 203: Display section (touch panel)

## Claims

1. A display controlling apparatus comprising:
a display section (101) and
a control unit (100) configured to control the display section (101)
i) to display a connection path (135) and at least one indication unit (136) between a first mark (130) and a second mark (131) according to a connection operation by a user on the display section (101) connecting the first mark (130) and the second mark (131) and
ii) to place the connection path (135) and the at least one indication unit (136) into a non-displayed state in response to a cutting operation by the user, which comprises tracing through the connection path (135) on the display section (101),
wherein the at least one indication unit (136) represents a flow of a substance between a sending party represented by the first mark (130) and a receiving party represented by the second mark (131);
wherein the control unit is further configured to control the flow of the substance in response to the connection operation or cutting operation and to change the flow of the substance according to an operation by the user at predetermined positions of the display section,
wherein at least one of a width of the connection path (135), speed of the at least one indication unit (136) or a number of the at least one indication unit (136) is changed if the flow of the substance is changed.

2. The apparatus of claim 1, wherein the connection operation is a drag operation.

3. The apparatus of claim 1, wherein the at least one indication unit (136) indicates power consumption.

4. The apparatus of claim 1, wherein at least one of a moving speed, number, size, shape or color of the at least one indication unit (136) is changed based on power consumption.

5. The apparatus of claim 1, wherein the at least one indication unit (136) is moved along the connection path (135) in accordance with a flow of power or represents a control signal for the second mark (131).

6. The apparatus of claim 5, wherein the at least one indication unit (136) represents a control signal for the second mark (131), which represents a device controlled by the control signal.

7. The apparatus of claim 1, wherein the at least one indication unit (136) is displayed in accordance with an operation on the connection path (135) by the user.

8. The apparatus of claim 1, wherein a type of the cutting operation is in accordance with a number of fingers of the user used to carry out the cutting operation.

9. The apparatus of claim 8, wherein a control carried out by the apparatus is different in accordance with the type of the cutting operation.

10. The apparatus of claim 7, wherein the operation on the connection path is a holding operation.

11. The apparatus of claim 10, wherein movement of the at least one indication unit (136) is changed in response to the holding operation.

12. The apparatus of claim 1, wherein a change of the at least one of the width of the connection path (135), the speed of the at least one indication unit (136) or the number of the at least one indication unit (136) is in accordance with whether the operation by the user at the predetermined positions of the display is a pinch-in operation or pinch-out operation.

13. The apparatus of claim 1, wherein the control unit (100) controls the display section (101) to display of a mark corresponding to a power storage apparatus with at least one of a mark of a battery, an indication of remaining capacity, an indication of a value of power supplied or an indication of a value of power consumption.

14. A display controlling method comprising:
controlling, by a processor (101), a display section (101) to display
i) a connection path (135) and at least one indication unit (136) between a first mark (130) and a second mark (131) according to a connection operation by a user on the display section (101) connecting the first mark (130) and the second mark (131) and
ii) to place the connection path (135) and the at least one indication unit (136) into a non-displayed state in response to a cutting operation by the user, which comprises tracing through the connection path (135) on the display section (101),
wherein the at least one indication unit (136) represents a flow of a substance or data between a first party represented by the first mark (130) and a second party represented by the second mark (131);
controlling, by a processor (100), the flow of the substance in response to the connection operation or cutting operation and to change the flow of the substance according to an operation by the user at predetermined positions of the display section,
wherein at least one of a width of the connection path (135), speed of the at least one indication unit (136) or a number of the at least one indication unit (136) is changed if the flow of the substance is changed.

15. A non-transitory recording medium recorded with a program executable by a display controlling apparatus according to claim 1, the program comprising instructions for performing the display controlling method of claim 14.

## Patentansprüche

1. Anzeigesteuerungsvorrichtung, umfassend:
eine Anzeigesektion (101) und
eine Steuereinheit (100), ausgelegt zum Steuern der Anzeigesektion (101)
i) zum Anzeigen eines Verbindungspfads (135) und mindestens einer Kennzeichnungseinheit (136) zwischen einem ersten Icon (130) und einem zweiten Icon (131) gemäß einer Verbindungsoperation durch einen Benutzer auf der Anzeigesektion (101), die das erste Icon (130) und das zweite Icon (131) verbindet, und
ii) zum Versetzen des Verbindungspfads (135) und der mindestens einen Kennzeichnungseinheit (136) in einen nicht-angezeigten Zustand als Reaktion auf eine Schneidoperation durch den Benutzer, welche Durchstreichen des Verbindungspfads (135) auf der Anzeigesektion (101) umfasst,
wobei die mindestens eine Kennzeichnungseinheit (136) einen Fluss einer Substanz zwischen einer Sendepartei, repräsentiert durch das erste Icon (130), und einer Empfangspartei, repräsentiert durch das zweite Icon (131), repräsentiert;
wobei die Steuereinheit ferner ausgelegt ist zum Steuern des Flusses der Substanz als Reaktion auf die Verbindungsoperation oder die Schneidoperation und zum Ändern des Flusses der Substanz gemäß einer Operation durch den Benutzer an vorbestimmten Positionen der Anzeigesektion,
wobei eine Breite des Verbindungspfads (135) und/oder die Geschwindigkeit der mindestens einen Kennzeichnungseinheit (136) und/oder eine Anzahl der mindestens einen Kennzeichnungseinheit (136) geändert wird, wenn sich der Fluss der Substanz ändert.

2. Vorrichtung nach Anspruch 1, wobei die Verbindungsoperation eine Ziehoperation ist.

3. Vorrichtung nach Anspruch 1, wobei die mindestens eine Kennzeichnungseinheit (136) eine Leistungsaufnahme angibt.

4. Vorrichtung nach Anspruch 1, wobei sich eine Bewegungsgeschwindigkeit und/oder eine Anzahl und/oder eine Größe und/oder eine Gestalt und/oder eine Farbe der mindestens einen Kennzeichnungseinheit (136) basierend auf der Leistungsaufnahme ändert bzw. ändern.

5. Vorrichtung nach Anspruch 1, wobei die mindestens eine Kennzeichnungseinheit (136) gemäß einem Leistungsfluss entlang des Verbindungspfads (135) bewegt wird oder ein Steuersignal für das zweite Icon (131) repräsentiert.

6. Vorrichtung nach Anspruch 5, wobei die mindestens eine Kennzeichnungseinheit (136) ein Steuersignal für das zweite Icon (131) repräsentiert, welches ein durch das Steuersignal gesteuertes Gerät repräsentiert.

7. Vorrichtung nach Anspruch 1, wobei die mindestens eine Kennzeichnungseinheit (136) gemäß einer Operation an dem Verbindungspfad (135) durch den Benutzer angezeigt wird.

8. Vorrichtung nach Anspruch 1, wobei eine Art der Schneidoperation einer Anzahl der Finger, die von dem Benutzer zum Ausführen der Schneidoperation verwendet wird, entspricht.

9. Vorrichtung nach Anspruch 8, wobei eine durch die Vorrichtung ausgeführte Steuerung entsprechend der Art der Schneidoperation eine andere ist.

10. Vorrichtung nach Anspruch 7, wobei die Operation an dem Verbindungspfad eine Halteoperation ist.

11. Vorrichtung nach Anspruch 10, wobei eine Bewegung der mindestens einen Kennzeichnungseinheit (136) als Reaktion auf die Halteoperation geändert wird.

12. Vorrichtung nach Anspruch 1, wobei eine Änderung der Breite des Verbindungspfads (135) und/oder die Geschwindigkeit der mindestens einen Kennzeichnungseinheit (136) und/oder eine Anzahl der mindestens einen Kennzeichnungseinheit (136) dem entspricht, ob die Operation durch den Benutzer an den vorbestimmten Positionen der Anzeige eine Zusammenzieh- oder eine Aufweitoperation ist.

13. Vorrichtung nach Anspruch 1, wobei die Steuereinheit (100) die Anzeigesektion (101) steuert, ein Icon, das einer Stromspeichervorrichtung mit einem Icon für eine Batterie und/oder eine Angabe einer Restkapazität und/oder eine Angabe eines Werts für Leistungsabgabe und/oder eine Angabe eines Werts für Leistungsaufnahme entspricht, anzuzeigen.

14. Anzeigesteuerungsverfahren, das Folgendes umfasst:
Steuern, durch einen Prozessor (101), einer Anzeigesektion (101) zum Anzeigen
i) eines Verbindungspfads (135) und mindestens einer Kennzeichnungseinheit (136) zwischen einem ersten Icon (130) und einem zweiten Icon (131) gemäß einer Verbindungsoperation durch einen Benutzer auf der Anzeigesektion (101), die das erste Icon (130) und das zweite Icon (131) verbindet, und
ii) zum Versetzen des Verbindungspfads (135) und der mindestens einen Kennzeichnungseinheit (136) in einen nicht-angezeigten Zustand als Reaktion auf eine Schneidoperation durch den Benutzer, welche Durchstreichen des Verbindungspfads (135) auf der Anzeigesektion (101) umfasst,
wobei die mindestens eine Kennzeichnungseinheit (136) einen Fluss einer Substanz oder von Daten zwischen einer ersten Partei, repräsentiert durch das erste Icon (130), und einer zweiten Partei, repräsentiert durch das zweite Icon (131), repräsentiert;
zum Steuern, durch einen Prozessor (100), des Flusses der Substanz als Reaktion auf die Verbindungsoperation oder die Schneidoperation und zum Ändern des Flusses der Substanz gemäß einer Operation durch den Benutzer an vorbestimmten Positionen der Anzeigesektion,
wobei eine Breite des Verbindungspfads (135) und/oder die Geschwindigkeit der mindestens einen Kennzeichnungseinheit (136) und/oder eine Anzahl der mindestens einen Kennzeichnungseinheit (136) geändert wird, wenn sich der Fluss der Substanz ändert.

15. Nichttransitorisches Aufzeichnungsmedium, aufgezeichnet mit einem Programm, das durch eine Anzeigesteuerungsvorrichtung nach Anspruch 1 ausführbar ist, wobei das Programm Anweisungen zum Durchführen des Anzeigesteuerungsverfahrens nach Anspruch 14 umfasst.

## Revendications

1. Appareil de commande d'affichage comprenant :
une section d'affichage (101) et
une unité de commande (100) configurée pour commander la section d'affichage (101)
i) pour afficher un chemin de connexion (135) et l'au moins une unité d'indication (136) entre une première marque (130) et une seconde marque (131) selon une opération de connexion par un utilisateur sur la section d'affichage (101) connectant la première marque (130) et la seconde marque (131) et
ii) pour placer le chemin de connexion (135) et l'au moins une unité d'indication (136) dans un état non affiché en réponse à une opération de découpe par l'utilisateur, qui comprend le traçage à travers le chemin de connexion (135) sur la section d'affichage (101),
l'au moins une unité d'indication (136) représentant un flux d'une substance entre une partie émettrice représentée par la première marque (130) et une partie destinataire représentée par la seconde marque (131) ;
l'unité de commande étant en outre configurée pour commander le flux de la substance en réponse à l'opération de connexion ou à l'opération de découpe et pour modifier le flux de la substance selon une opération par l'utilisateur à des positions prédéterminées de la section d'affichage,
au moins l'un ou l'une parmi une largeur du chemin de connexion (135), une vitesse de l'au moins une unité d'indication (136) ou un nombre de l'au moins une unité d'indication (136) étant modifié(e) si le flux de la substance est modifié.

2. Appareil selon la revendication 1, l'opération de connexion étant une opération de glissement.

3. Appareil selon la revendication 1, l'au moins une unité d'indication (136) indiquant la consommation de puissance.

4. Appareil selon la revendication 1, au moins l'un ou l'une parmi une vitesse de déplacement, un nombre, une taille, une forme ou une couleur de l'au moins une unité d'indication (136) étant modifié(e) sur la base de la consommation de puissance.

5. Dispositif selon la revendication 1, l'au moins une unité d'indication (136) étant déplacée le long du chemin de connexion (135) selon un flux de puissance ou représentant un signal de commande pour la seconde marque (131).

6. Appareil selon la revendication 5, l'au moins une unité d'indication (136) représentant un signal de commande pour la seconde marque (131), qui représente un dispositif commandé par le signal de commande.

7. Appareil selon la revendication 1, l'au moins une unité d'indication (136) étant affichée selon une opération sur le chemin de connexion (135) par l'utilisateur.

8. Appareil selon la revendication 1, un type de l'opération de découpe étant selon un nombre de doigts de l'utilisateur utilisés pour effectuer l'opération de découpe.

9. Appareil selon la revendication 8, une commande effectuée par l'appareil étant différente selon le type de l'opération de découpe.

10. Appareil selon la revendication 7, l'opération sur le chemin de connexion étant une opération de maintien.

11. Appareil selon la revendication 10, le mouvement de l'au moins une unité d'indication (136) étant modifié en réponse à l'opération de maintien.

12. Appareil selon la revendication 1, une modification de l'au moins un ou une parmi la largeur du chemin de connexion (135), la vitesse de l'au moins une unité d'indication (136) ou le nombre de l'au moins une unité d'indication (136) étant selon que l'opération de l'utilisateur aux positions prédéterminées de l'écran est une opération de pincement intérieur ou une opération de pincement extérieur.

13. Appareil selon la revendication 1, l'unité de commande (100) commandant la section d'affichage (101) pour afficher une marque correspondant à un appareil de stockage de puissance avec au moins une marque parmi une marque d'une batterie, une indication de capacité restante, une indication d'une valeur de puissance fournie ou une indication d'une valeur de consommation de puissance.

14. Procédé de commande d'affichage comprenant :
la commande, par un processeur (101), d'une section d'affichage (101) pour afficher
i) un chemin de connexion (135) et au moins une unité d'indication (136) entre une première marque (130) et une seconde marque (131) selon une opération de connexion par un utilisateur sur la section d'affichage (101) connectant la première marque (130) et la seconde marque (131) et
ii) pour placer le chemin de connexion (135) et l'au moins une unité d'indication (136) dans un état non affiché en réponse à une opération de découpe par l'utilisateur, qui comprend le traçage à travers le chemin de connexion (135) sur la section d'affichage (101), l'au moins une unité d'indication (136) représentant un flux d'une substance ou de données entre une première partie représentée par la première marque (130) et une seconde partie représentée par la seconde marque (131) ;
la commande, par un processeur (100), du flux de la substance en réponse à l'opération de connexion ou de découpe et la modification du flux de la substance selon une opération par l'utilisateur à des positions prédéterminées de la section d'affichage,
au moins l'un ou l'une parmi une largeur du chemin de connexion (135), la vitesse de l'au moins une unité d'indication (136) ou un nombre de l'au moins une unité d'indication (136) étant modifié(e) si le flux de la substance est modifié.

15. Support d'enregistrement non transitoire enregistré avec un programme exécutable par un appareil de commande d'affichage selon la revendication 1,
le programme comprenant des instructions pour exécuter le procédé de commande d'affichage selon la revendication 14.
